(19) Europäisches Patentamt / European Patent Office / Office européen des brevets

(11) **EP 4 617 295 A1**

(12) **EUROPEAN PATENT APPLICATION**
published in accordance with Art. 153(4) EPC


(43) Date of publication:
**17.09.2025 Bulletin 2025/38**

(21) Application number: **23890708.3**

(22) Date of filing: **10.11.2023**

(51) International Patent Classification (IPC):
***C08F 283/06*** (2006.01) ***C08F 290/06*** (2006.01)
***C08F 220/14*** (2006.01) ***C08F 220/12*** (2006.01)
***C08F 220/10*** (2006.01) ***C08F 2/24*** (2006.01)
***C08F 14/18*** (2006.01) ***C08F 114/18*** (2006.01)
***C08F 214/18*** (2006.01)

(52) Cooperative Patent Classification (CPC):
**C08F 2/24; C08F 14/18; C08F 114/18; C08F 214/18; C08F 220/10; C08F 220/12; C08F 220/14; C08F 283/06; C08F 290/06**

(86) International application number:
**PCT/CN2023/131095**

(87) International publication number:
**WO 2024/104274 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.11.2022 CN 202211419402**
**14.11.2022 CN 202211425292**
**14.11.2022 CN 202211419393**
**14.11.2022 CN 202211431306**



(71) Applicants:
- **Zhejiang Research Institute of Chemical Industry Co., Ltd.**
  **Hangzhou, Zhejiang 310023 (CN)**
- **Zhejiang Lantian Environmental Protection Hi-Tech Co., Ltd.**
  **Hangzhou, Zhejiang 310018 (CN)**
- **Sinochem Lantian Co., Ltd.**
  **Hangzhou, Zhejiang 310051 (CN)**

(72) Inventors:
- **LU, Yangtian**
  **Hangzhou, Zhejiang 310023 (CN)**
- **ZHU, Weiwei**
  **Hangzhou, Zhejiang 310023 (CN)**
- **ZHENG, Yilei**
  **Hangzhou, Zhejiang 310023 (CN)**
- **WU, Yusong**
  **Hangzhou, Zhejiang 310023 (CN)**

(74) Representative: **Meyer-Dulheuer MD Legal Patentanwälte PartG mbB**
**Hanauer Landstr. 287-289**
**60314 Frankfurt am Main (DE)**


# (54) SURFACTANT, PREPARATION METHOD THEREFOR AND USE THEREOF


(57) A surfactant, a method for preparing the same and a use thereof are provided. The surfactant is a copolymer, and the comonomers used to prepare the surfactant includes at least one hydrophobic monomer with a structure represented by formula (1) and at least one hydrophilic monomer with a structure represented by formula (2). The surfactant set forth in the present application can form a single molecule micelle structure in water, and can be adsorbed onto an interface of polymer particles to form an amphoteric film-like structure. The special structure enables the surfactant to have low interfacial energy and good mobility at the same time, increasing the material exchange rate, and promoting a polymerization reaction


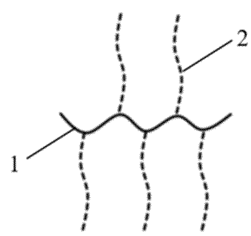


FIG. 2

EP 4 617 295 A1

## Description

### CROSS-REFERENCE TO RELATED APPLICATIONS

This application claims priority to Chinese patent application No. 202211419402.6, filed on November 14, 2022, and titled "SURFACTANT, PREPARATION METHOD THEREFOR AND USE THEREOF"; No. 202211425292.4, filed on November 14, 2022, and titled "METHOD FOR PREPARING FLUORINE-CONTAINING POLYMER"; No. 202211419393.0, filed on November 14, 2022, and titled "METHOD FOR ADJUSTING PARTICLE SIZE OF FLUORINE-CONTAINING POLYMER EMULSION"; and No. 202211431306.3, filed on November 14, 2022, and titled "METHOD FOR PREPARING FLUORINE-CONTAINING POLYMER EMULSION WITH SMALL PARTICLE SIZE AND USE THEREOF", and the contents of which are hereby incorporated by reference in its entirety.

### TECHNICAL FIELD

The present disclosure relates to the field of polymer, in particular, relates to a surfactant, a method for preparing the same and a use thereof.

### BACKGROUND

In methods for preparing fluorine-containing polymers, emulsion polymerization is one of the most commonly used polymerization methods. Among them, surfactants as emulsifiers are critical raw materials. To date, the most widely used surfactants in the polymerization of fluorine-containing monomers are two types of fluorine-containing surfactants led by PFOA and GenX. The advantages of PFOA and GenX lie in special surface activity and excellent chemical stability. However, these advantages are also associated with the ultra-long degradation half-life and ultra-high toxicity of fluorine-containing surfactants, which results in fluorine-containing polymers having not only high waste treatment production and use costs, but also discharge into the natural environment. To address the above issues, it is an urgent need and important to develop biodegradable, low-toxicity, or even non-toxic surfactants suitable for the polymerization of fluorine-containing monomers.

Currently, regarding the toxicity issues of fluorine-containing surfactants, the related art has disclosed the substitution with fluorine-free surfactants. Design concepts for fluorine-free surfactants are shown herein.

1) Designing hydrophilic monomers that can copolymerize with fluorine-containing monomers, with the resulting oligomers used as surfactants. Patent No. CN104292374A, CN104292378A, US2847404A, and US5859123A have adopted the design concept. Although the design concept has somewhat addressed the toxicity issue, the resulting fluorine-containing polymers contain irreducible hydrophilic groups, leading to performance degradation and limited application scope. Additionally, the solid content of the polymers prepared through the design concept is generally low.
2) Designing block-type amphoteric macromolecular surfactants. Patent No. CN1535989A and CN111148772A have adopted the design concept. However, the concept introduces another technical issue: the block-type amphoteric macromolecular surfactants exhibit poor mobility at the interface of fluorine-containing resins and gas-liquid interfaces, resulting in a reduced rate of material exchange between the gas-liquid interfaces.

### SUMMARY

In order to solve the technical problems above, applicants of the present disclosure found that surfactants in which hydrophobic monomers and hydrophilic monomers are separately disposed can effectively replace PFOA substances. In the present disclosure, the surfactant can generate a single molecule micelle structure in water and can be adsorbed onto an interface of polymer particles to form an amphoteric film-like structure. The micelle structure can be switched to the film-like structure when some conformation of the main chain is changed. The special structure enables the surfactant to have low interfacial energy and good mobility at the same time, increasing the material exchange rate, and promoting a polymerization reaction. In addition, the surfactant in the present disclosure can reduce side reactions of emulsion polymerization reactions, improve interfacial wettability, increase steric hindrance of a surface hydration layer, and improve stability of a disperse system.

In a first aspect of the present disclosure, a surfactant is provided. The surfactant is a copolymer, a comonomer for preparing the surfactant includes at least one of hydrophobic monomers as shown in formula (1) and at least one of hydrophilic monomers as shown in formula (2),

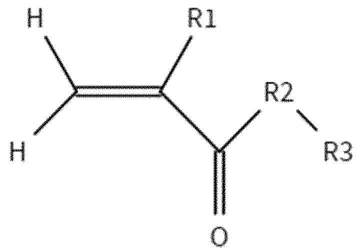

formula (1),

wherein R1 is selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups;
R2 is selected from O, S, imino group, $C_1$-$C_{18}$ linear alkylimino groups or branched alkylimino groups or cycloalkylimino groups, or $C_1$-$C_{18}$ arylimino groups;
R3 is selected from phenyl group, $C_1$-$C_4$ linear alkyl groups or branched alkyl groups, $C_5$-$C_{18}$ linear alkyl groups or branched alkyl groups, benzyl groups, 2-phenyl-2-propyl group or allyl group, and

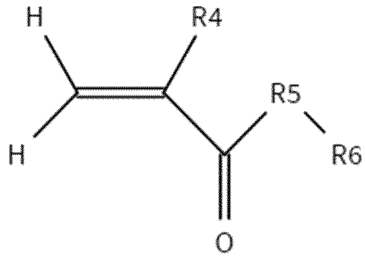

formula (2),

wherein R4 is selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups;
R5 is selected from O, S, imino group, $C_1$-$C_{18}$ linear alkylimino groups or branched alkylimino groups or cycloalkylimino groups, or $C_1$-$C_{18}$ arylimino groups; and
R6 is selected from polyethylene glycol derivates $(CH_2CH_2O)_qZ$, wherein *q* is an integer greater than 4 and less than and equal to 100, and Z is selected from H, or $C_1$-$C_3$ linear alkyl groups or branched alkyl groups.

In the hydrophobic monomer as shown in formula (1),

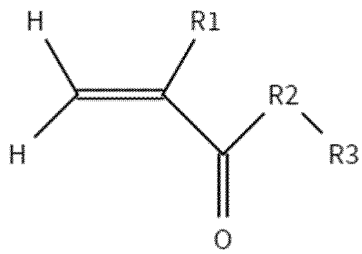

formula (1).

R1 is selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups;
R2 is selected from O, S, imino group, $C_1$-$C_{18}$ linear alkylimino groups or branched alkylimino groups or cycloalkylimino groups, or $C_1$-$C_{18}$ arylimino groups;
R3 is selected from phenyl group, $C_1$-$C_4$ linear alkyl groups or branched alkyl groups, $C_5$-$C_{18}$ linear alkyl groups or branched alkyl groups, benzyl groups, 2-phenyl-2-propyl group or allyl group.

In consideration of reducing side reactions of the polymerization reaction and improving interfacial wettability, optionally, R1 is selected from H, $C_1$-$C_5$ linear alkyl groups or branched alkyl groups, or $C_1$-$C_5$ linear alkyl ether groups or

branched alkyl ether groups; R2 is selected from O, S, imino group, $C_1$-$C_9$ linear alkylimino groups or branched alkylimino groups or cyclo-alkylimino groups, or $C_1$-$C_9$ arylimino groups; and R3 is selected from phenyl group, $C_1$-$C_4$ linear alkyl groups or branched alkyl groups, or $C_5$-$C_9$ linear alkyl groups or branched alkyl groups. Optionally, R1 is selected from H or methyl group; R2 is selected from O or imino group; and R3 is selected from phenyl group, $C_1$-$C_4$ linear alkyl groups or single-branched alkyl groups. When the surfactant includes an active C-H bond, chain transfer reaction may be caused, leading to surfactant being grafted onto the fluorine-containing polymer. Among all of the C-H bonds, chain transfer activity of primary carbon and phenyl group are the lowest. In the fluorine-free surfactant of the related art, a content of C-H bonds in the methyl group or a content of C-H bonds in the phenyl group are generally low. For example, PLURONIC 31R1 includes a great amount of tertiary carbons, and tertiary carbons have high activity. In order to further avoid affecting application performance of the fluorine-containing polymer caused by side reaction of chain transfer reaction and the surfactant from being grafted onto the florin-containing polymer, R1 is selected from methyl group, R2 is selected from O, and R3 is at least one selected from methyl group, tertiary butyl group or phenyl group.

With increase of the number of carbon atoms in R3, a volume of a hydrophobic grouping in a side chain may become larger and larger. When R3 is an alkyl group containing more than 2 branched chains and more than 10 carbon atoms, the volume of the hydrophobic grouping is unduly large. Thus, a mobility of the main chain is insufficient, a surface performance of the product is reduced, and the application performance of the product as an emulsion polymerization emulsifier is worse. In addition, with increase of the number of carbon atoms in R3, the degree of polymerization of ethylene glycol in R6 in the corresponding hydrophilic monomer should be increased.

The hydrophobic monomer as shown in formula (1) of the present disclosure can satisfy the above requirements. Optionally, the hydrophobic monomers are at least one of methyl methacrylate, ethyl methacrylate, propyl methacrylate, isopropyl methacrylate, butyl methacrylate, isobutyl methacrylate, *tert*-butyl methacrylate, 2-ethylhexyl methacrylate, cyclohexyl methacrylate, octadecyl methacrylate, *n*-hexyl methacrylate, isobornyl methacrylate, phenyl methacrylate, benzyl methacrylate, hydroxypropyl methacrylate, methyl acrylate, ethyl acrylate, propyl acrylate, isopropyl acrylate, butyl acrylate, isobutyl acrylate, *tert*-butyl acrylate, 2-ethylhexyl acrylate, cyclohexyl acrylate, octadecyl acrylate, *n*-hexyl acrylate, isobornyl acrylate, phenyl acrylate, benzyl acrylate or hydroxypropyl acrylate. Optionally, the hydrophobic monomers are at least one of methyl methacrylate, ethyl methacrylate, propyl methacrylate, isopropyl methacrylate, butyl methacrylate, isobutyl methacrylate, *tert*-butyl methacrylate, phenyl methacrylate, hydroxypropyl methacrylate, methyl acrylate, ethyl acrylate, propyl acrylate, isopropyl acrylate, butyl acrylate, isobutyl acrylate, *tert*-butyl acrylate, or phenyl acrylate.

In the hydrophilic monomer as shown in formula (2),

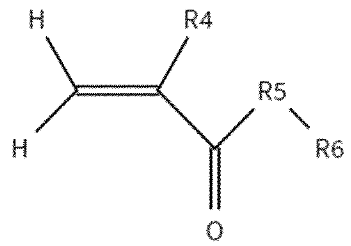

formula (2).

R4 is at least one selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups.

R5 is at least one selected from O, S, imino group, $C_1$-$C_{18}$ linear alkylimino groups or branched alkylimino groups or cyclo-alkylimino groups, or $C_1$-$C_{18}$ arylimino groups.

R6 is at least one selected from polyethylene glycol derivates $(CH_2CH_2O)_qZ$, wherein $q$ is an integer greater than 4 and less than and equal to 100, and Z is selected from H, or $C_1$-$C_3$ linear alkyl groups or branched alkyl groups.

In consideration of reducing side reactions of the polymerization reaction, improving interfacial wettability, increasing steric hindrance of the hydrated surface layer, and improving stability of the dispersion system, optionally, R4 is at least one selected from H, $C_1$-$C_5$ linear alkyl groups or branched alkyl groups, or $C_1$-$C_5$ linear alkyl ether groups or branched alkyl ether groups; R5 is at least one selected from O, imino group, $C_1$-$C_9$ linear alkylimino groups or branched alkylimino groups or cyclo-alkylimino groups, or $C_1$-$C_9$ arylimino groups; and R6 is alt least one selected from polyethylene glycol derivates $(CH_2CH_2O)_qZ$, wherein $q$ is an integer greater than 9 and less than and equal to 100, and Z is selected from H, or $C_1$-$C_3$ linear alkyl groups or branched alkyl groups. Optionally, R4 is selected from H or methyl group; R5 is at least one selected from O or imino group; and R6 is at least one selected from polyethylene glycol derivates $(CH_2CH_2O)_qZ$, wherein $q$ is an integer greater than 9 and less than and equal to 100, and Z is selected from H, or $C_1$-$C_3$ linear alkyl groups or branched alkyl groups. Optionally, R4 is selected from H; R5 is selected from O; and R6 is at least one selected from

polyethylene glycol derivates $(CH_2CH_2O)_qZ$, wherein *q* is an integer greater than 9 and less than and equal to 50, and Z is selected from H, or $C_1$-$C_3$ linear alkyl groups or branched alkyl groups.

A micromolecule fluorine-containing surfactant can generate a thermodynamic stable particle on account of low surface tension. In the present disclosure, the dynamic stability of the surfactant can be increased on account of the steric hindrance, and a critical factor of the steric hindrance is a chain length of polyethylene glycol on the branched chain of the surfactant. When a degree of polymerization (*q* value) of the polyethylene glycol in R6 is unduly low, the steric hindrance of the polyethylene glycol chain is unduly small, leading to large particle size of the emulsion, poor stability of the emulsion, and demulsification in the polymerization process. When the degree of polymerization (*q* value) of the polyethylene glycol in R6 is greater than 4, especially, when the degree of polymerization (*q* value) of the polyethylene glycol in R6 is greater than 9, a hydrated layer with high steric hindrance can be generated by the polyethylene glycol, allowing the surfactant to form a stable single molecule micelle structure in water. Thus, a micelle with small particle size can be obtained, and a surface activity of the surfactant is better. Optionally, the degree of polymerization (*q* value) of the polyethylene glycol in R6 is greater than 20. The degree of polymerization (*q* value) of the polyethylene glycol in R6 is less than or equal to 100. Optionally, the degree of polymerization (*q* value) of the polyethylene glycol in R6 is less than or equal to 50.

The hydrophilic monomer as shown in formula (2) satisfies the above requirements. Optionally, a molecular weight of the hydrophilic monomers is in a range of 400 to 2000, and the hydrophilic monomers are at least one of polyethylene glycol methyl ether methacrylate, polyethylene glycol ethyl ether methacrylate, polyethylene glycol propyl ether methacrylate or polyethylene glycol methacrylate.

In the present disclosure, the halogenated may be perhalogenated or partially halogenated; and halogenate may be replaced by fluorinated, chlorinated, brominnated, or iodinated. For example, monofluoromethane represents that one hydrogen atom in a methane molecule is replaced with a fluorine atom.

In the present disclosure, a molar content of a hydrophobic monomer structural unit as shown in formula (1) is defined as *x,* a molar content of a hydrophilic monomer structural unit as shown in formula (2) is defined as *y,* and the molar content *x* of the hydrophobic monomer structural unit and the molar content *y* of the hydrophilic monomer structural unit satisfy following formulas: $x+y=1$, and $1 \leq x/y \leq 9$. In consideration of a plurality of aspects such as improving a rate of emulsion polymerization, reducing side reactions of emulsion polymerization, improving wettability of a water-oil interface, increasing the steric hindrance of the hydrated surface layer and improving stability of the dispersing system, the molar content *x* of the hydrophobic monomer structural unit and the molar content *y* of the hydrophilic monomer structural unit satisfy following formulas: $x+y=1$, and $2 \leq x/y \leq 6$.

When a value of $x/y$ is unduly low, the hydrophilic monomers may be disposed on the hydrophobic main chain in form of segments. At the same time, the degree of polymerization of the hydrophobic monomer segment is low, leading to reducing of adsorption capacity of the surfactant on the surface of the emulsion. In addition, the surfactant cannot generate the single molecule micelle structure in water, and the micelle generated by the surfactant in water has a large particle size. When the valve of $x/y$ is unduly great, the degree of polymerization of the hydrophobic monomer chain segment is unduly high. Thus, the mobility of the hydrophobic segment may reduce, so that the micelle generated on the surfactant can be too stable and hard to be adsorbed on the surface of the emulsion molecule, leading to reducing of emulsion stability.

Furthermore, in the present disclosure, an HLB value of the surfactant is in a range of 8 to 14. In consideration of a plurality of aspects such as improving a rate of emulsion polymerization, reducing side reactions of emulsion polymerization, improving wettability of a water-oil interface, increasing the steric hindrance of the hydrated surface layer and improving stability of the dispersing system, optionally, the HLB value of the surfactant is in a range of 10 to 12.

In the present disclosure, the surfactant is a random copolymer of the hydrophobic monomers and the hydrophilic monomers, and a reactivity ratio of the hydrophobic monomers and the hydrophilic monomers are in a range of 0.5 to 2.5. In this way, the hydrophobic monomer and the hydrophilic monomer can be disposed on the main chain of the surfactant and spaced from each other on the main chain of the surfactant, and the surface activity can be better.

From the point of view of surfactant molecular structure, the surfactant of the present disclosure is a multi-block copolymer with a block number of the hydrophobic monomer and a block number of the hydrophilic monomer greater than 5; and in each block of the surfactant, a block length of a hydrophobic monomer structural unit is in a range of 1 to 10, or a block length of a hydrophilic monomer structural unit is in a range of 1 to 10. In this way, the hydrophobic monomer and the hydrophilic monomer can be disposed on the main chain of the surfactant and spaced from each other on the main chain of the surfactant, and the surface activity can be better.

In the present disclosure, a number-average molecular weight of the surfactant is in a range of 5000 to 100000. When the molecular weight of the surfactant is lower than the lower limit, it is hard to generate a stable single molecule micelle, and the surfactant cannot satisfy the structure of the multi-block copolymer. When the molecular weight of the surfactant is higher than the high limit, the particle size of the micelle is great, and the mobility of the molecular chain reduces, resulting in lower surface performance.

In the present disclosure, it is easy for the surfactant to generate the single molecule micelle in an aqueous medium, and the surfactant does not has a critical micelle concentration. Compared to the related art, the polyethylene glycol segment chain in the present disclosure can generate a hydrated layer with a high steric hindrance, allowing the

surfactant to generate the stable single molecule micelle structure in water. A content of a single molecule micelle in the micelle is greater than or equal to 50%. Optionally, the content of the single molecule micelle in the micelle is greater than or equal to 70%. Optionally, the content of the single molecule micelle in the micelle is greater than or equal to 80%. A particle size of the micelle generated by the surfactant in water is in a range of 1 nm to 90 nm. The particle size of the fluorine-containing polymer emulsion is generally in a range of 100 nm to 300 nm. When the particle size of the micelle is unduly large, an adsorption amount of the surfactant on the surface of the emulsion molecule is low. Optionally, particle size of the micelle generated by the surfactant in water is in a range of 5 nm to 30 nm. Optionally, particle size of the micelle generated by the surfactant in water is in a range of 7 nm to 15 nm. The size of the micelle is related to a ratio of the hydrophobic monomer to the hydrophilic monomer and a molecular weight of the copolymer. When the particle size of the micelle is too large, the generated micelle is a multimolecular micelle that is averse to be adsorbed on the surface of the polymer. When the particle size of the micelle is too small, the polymer cannot generate effective micelle.

In the present disclosure, the ratio of the hydrophobic monomer structural unit and the hydrophilic monomer structural unit in the surfactant is related to the performance of the surfactant. Different ratios are selected according to the molecular structure and molecular weight of the hydrophobic monomer and the hydrophilic monomer, so as to satisfy requirements of the emulsifier of the emulsion polymerization.

In the present disclosure, the surfactant includes a hydrophobic main chain and a hydrophilic branched chain. The carbon main chain is hydrophobic, and the hydrophilic monomers can be disposed on the hydrophobic main chain as chains. The branched chains are hydrophilic. Such special molecular structure can allow the surfactant to form a single molecule micelle structure in water and can be adsorbed on the interface of the polymer particle and form an amphoteric film structure. The micelle structure can be switched to the film-like structure when some conformation of the main chain is changed. The special structure enables the surfactant to have low interfacial energy and good mobility at the same time, increasing the material exchange rate and promoting a polymerization reaction.

In a second aspect of the present disclosure, the present disclosure further provides a method for preparing a surfactant, which includes following steps: subjecting the hydrophobic monomers as shown in the formula (1) and the hydrophilic monomer as shown in the formula (2) to a polymerization reaction in a solvent containing an initiator to obtain a surfactant, wherein the formula (1) and the formula (2) are as defined above.

The initiator is not specifically restricted, as long as the monomers can be polymerized. Optionally, the initiator is selected from at least one of peroxides or azo compounds. The peroxides can be persulfates such as ammonium persulfate, potassium persulfate, or sodium persulfate. The peroxides can be organic peroxides. The organic peroxides can be alkyl peroxides, dialkyl peroxides or diacyl peroxides such as di-tert-butyl peroxide or benzoyl peroxide. The organic peroxides may be ester peroxides such as tert-amyl peroxytrimethylacetate, succinic acid peroxide or tert-butyl peroxytrimethylacetate. The organic peroxides may be dicarbonyl peroxide such as di-*n*-propyl peroxydicarbonate or diisopropyl peroxydicarbonate. The azo compounds may be selected from dimethyl azodiisobutyrate, azodiisobutyronitrile, or 2,2'-azobis-(2,4-dimethyl-4-methoxyvaleronitrile).

The solvent is not specifically limited, as long as the monomers can be polymerized. Optionally, the solvent is at least one of alcohol small molecule compounds, ester small molecule compounds, or ether small molecule compounds.

The alcohol small molecule compounds are selected from at least one of $C_1$-$C_{10}$ alcohol compounds, such as isopropanol or tertiary butanol.

The ester small molecule compounds are selected from at least one of $C_1$-$C_{10}$ ester compounds, such as ethyl acetate or diethyl carbonate.

The ether small molecule compounds are selected from at least one of $C_1$-$C_{10}$ ether compounds, such as diethyl ether.

The solvent is at least one selected from methanol, ethanol, *n*-propanol, isopropanol, *tert*-butanol, ethyl acetate, dimethyl carbonate, tetrahydrofuran, ethylene glycol dimethyl ether, or 1,3-dioxolane. The generated surfactant can be directly used without separating from the solvent. When the surfactant is directly used, the solvent can play a role of adjusting the molecular weight of the polymer, i.e., playing a role of chain transfer agent.

A temperature of the polymerization reaction is in a range of 50°C to 100 °C, and a time of the polymerization reaction is in a range of 5 h to 25 h.

The conversion rate of the hydrophobic monomer and the hydrophilic monomer is greater than 99%. Optionally, the conversion rate of the hydrophobic monomer and the hydrophilic monomer approximates 100%. Optionally, the conversion rate of the hydrophobic monomer and the hydrophilic monomer is 100%.

In a third aspect of the present disclosure, the present disclosure further provides a use of the surfactant, and the surfactant is used in an emulsion polymerization reaction as an emulsifier.

In the present disclosure, an amount of the surfactant added in the emulsion polymerization reaction is in a range of 0.001 wt% to 5 wt% of an amount of a generated polymer. Optionally, the amount of the surfactant added in the emulsion polymerization reaction is in a range of 0.01 wt% to 0.1 wt% of the amount of the generated polymer. The particle size of the emulsion can be reduced by increasing an amount of the surfactant added in the emulsion polymerization reaction. When the amount of the surfactant added in the emulsion polymerization reaction is in a range of 0.3 wt% to 3 wt% of an amount of

a generated polymer, the particle size of the emulsion can be less than 100 nm. However, since an excessive amount of the surfactant is added, an induction period of the polymerization reaction is long, a rate of the polymerization reaction is slow, and a cost of the polymerization reaction is high. When an unduly less amount of the surfactant is added, the emulsion has worse stability, and the yield is low. Compared with the PFOA type surfactant, when the performance of the surfactant are the same, the amount of the surfactant of the present disclosure added in the polymerization reaction can be reduced to 1/5 of the amount of the surfactant of the PFOA type surfactant. Compared to general fluorine-free surfactant, when the amount of the surfactant of the present disclosure added in the polymerization reaction is the same as the amount of the fluorine-free surfactant in the related art, the particle size of the emulsion can be reduced by 40%, and a stable period of the emulsion can be prolonged to at least two times.

In the present disclosure, the emulsion polymerization reaction is a polymerization reaction of a fluorine-containing monomer, or a polymerization reaction of a fluorine-containing monomer and a fluorine-free monomer.

The fluorine-containing monomer is at least one of fluoroethylene, vinylidene fluoride, trifluoroethylene, tetrafluoroethylene, hexafluoropropylene, tetrafluoropropylene, chlorotrifluoroethylene 1,1-fluoro vinyl chloride, 1,2-fluoro vinyl chloride, perfluoro alkyl vinyl, perfluoroalkyl vinyl ether, perfluoro *n*-propyl vinyl ether, perfluoromethyl vinyl ether or perfluoro(2,2-dimethyl-1,3-dioxole). Optionally, the fluorine-containing monomer is at least one of fluoroethylene, vinylidene fluoride, trifluoroethylene, hexafluoropropylene, chlorotrifluoroethylene, 1,1-fluoro vinyl chloride, perfluoro *n*-propyl vinyl ether, perfluoromethyl vinyl ether or perfluoro(2,2-dimethyl-1,3-dioxole). The perfluoroalkyl vinyl ether may be selected from at least one of perfluoromethyl vinyl ether, perfluoroethyl vinyl ether, perfluoro *n*-propyl vinyl ether, or perfluorobutyl vinyl ether.

The fluorine-free monomer is at least one of ethylene, acrylates, methyl acrylate, methacrylates, methyl methacrylate, vinyl ethers, vinyl acetate, acrylonitrile, butadiene, isoprene, styrene, maleic anhydride or itaconic acid. When the emulsion polymerization reaction is the polymerization of the fluorine-containing monomer and the fluorine-free monomer, an amount of the fluorine-free monomer is in a range of 0 to 50 mol% of a total amount of the fluorine-containing monomer and the fluorine-free monomer.

In the present disclosure, the surfactant is used for preparing copolymers selected from polyvinylidene difluoride (PVDF), polyvinylidene fluoride, polytrifluoroethylene, polychlorotrifluoroethylene, polytetrafluoroethylene, vinylidene difluoride-trifluoroethylene copolymer, vinylidene difluoride-chlorotrifluoroethylene copolymer, vinylidene difluoride-tetrafluoroethylene copolymer, vinylidene difluoride-hexafluoropropylene copolymer, vinylidene difluoride-trifluoroethylene-chlorotrifluoroethylene terpolymer, vinylidene difluoride-trifluoroethylene-chlorofluoroethylene terpolymer or ethylene-chlorotrifluoroethylene copolymer.

In the emulsion polymerization reaction of the present disclosure, a temperature of the polymerization reaction is in a range of 5 °C to 130 °C, and a pressure of the polymerization reaction is in a range of 0.05 MPa to 10 MPa. Optionally, the temperature of the polymerization reaction is in a range of 60 °C to 100 °C, and the pressure of the polymerization reaction is in a range of 1 MPa to 6 MPa. The temperature of the polymerization reaction and the pressure of the polymerization reaction can be selected according to the type of the fluorine-containing monomer, the molecular weight of the target fluorine-containing polymer and the rate of the polymerization reaction.

The surfactant of the present disclosure can be used together with an initiator, a chain transfer agent and a detergent in the field of polymerization. The surfactant of the present disclosure will not decompose at the temperature of the polymerization reaction and the pressure of the polymerization reaction.

Compared to the related art, the surfactant of the present disclosure has following advantages.

1) The surfactant of the present disclosure can be used to replace the PFOA type fluorine-containing surfactant, so as to solve the problem that the PFOA type fluorine-containing surfactant pollutes the environment.
2) The surfactant of the present disclosure can be used to replace the hydrophilic comonomer surfactant, so as to solve the problem that the generated fluorine-containing polymer includes hydrophilic groups that cannot be separated from the fluorine-containing polymer.
3) The surfactant of the present disclosure can be used to replace multiple-block copolymer surfactant, so as to improve the exchange rate between the liquid and the gas, thereby improving the production efficiency.

In a fourth aspect of the present disclosure, a method for preparing a fluorine-containing polymer is further provided. The method includes following steps: subjecting a polymerization monomer to an emulsion polymerization reaction to obtain the fluorine-containing polymer in an aqueous medium containing the surfactant and an initiator. The surfactant is the surfactant provided in the first aspect of the present disclosure.

The amount of the surfactant used in the polymerization reaction is the same as the amount of the surfactant used in the polymerization reaction in the third aspect of the present disclosure, which will not be repeated herein.

In the present disclosure, a particle size of an emulsion of the fluorine-containing polymer is in a range of 70 nm to 240 nm. Optionally, the particle size of the emulsion of the fluorine-containing polymer is in a range of 110 nm to 160 nm.

In the present disclosure, the emulsion polymerization reaction includes a step of subjecting the polymerization

monomer to emulsion polymerization reaction to obtain the fluorine-containing polymer. The polymerization monomer is a fluorine-containing monomer or a mixture of a fluorine-containing monomer and a fluorine-free monomer.

In the present disclosure, the fluorine-containing monomer and the fluorine-free monomer are the same as those in the third aspect of the present disclosure, which will not be repeated herein.

Processing conditions (such as temperature of the polymerization reaction and the pressure of the polymerization reaction) of the emulsion polymerization reaction of the present disclosure are the same as those in the third aspect, which will not be repeated herein. In the present disclosure, the emulsion polymerization reaction is performed under conditions of stirring. The stirring rate is in a range of 50 to 700rpm. A method for stirring can be selected from magnetic stirring or mechanical stirring, or other kinds of stirring that can accomplish the corresponding stirring functions.

In the present disclosure, a mass of the surfactant is in a range of 0.1 ppm to 1000 ppm relative to a mass of a generated fluorine-containing polymer. Optionally, the mass of the surfactant is in a range of less than 100 ppm relative to a mass of a generated fluorine-containing polymer, on a mass basis. Optionally, the mass of the surfactant is in a range of less than 10 ppm relative to a mass of a generated fluorine-containing polymer, on a mass basis.

In the present disclosure, the fluorine-containing polymer is any fluorine-containing polymer. The fluorine-containing polymer can be the same as those in the third aspect of the present disclosure, which will not be repeated herein.

In the present disclosure, the initiator can be general initiators in the field of fluorine-containing monomer polymerization. For example, the initiator may include persufalcts, such as ammonium persulfate or potassium persulfate. The initiator may include azo initiator such as 2,2'-azobis-(2,4-dimethyl-4-methoxyvaleronitrile) or azodiisobutyronitrile (AIBN). The initiator can be selected from organic peroxides, such as alkyl peroxides, dialkyl peroxides, diacyl peroxides, ester peroxides, or dicarbonyl peroxide; for example, 2,5-bis(tert-butylperoxy)-2,5-dimethylhexane, benzoyl peroxide and its derivatives, tert-butyl peroxypivalate, tert-amyl peroxypivalate, bis(4-tert-butylcyclohexyl) peroxydicarbonate, sodium peroxydicarbonate, bis(*n*-alkyl) peroxydicarbonate, di(tert-butyl) peroxide, succinyl peroxide, di-*n*-propyl peroxydicarbonate, or di-isopropyl peroxydicarbonate. The amount of the initiator is in a range of 0.005 wt% to 2.5 wt% to the otal amount of polymerization monomers.

In the present disclosure, a chain transfer agent can be added in the emulsion polymerization reaction, so as to adjust a molecular weight of the fluorine-containing polymer. The chain transfer agent is a chain transfer agent generally used in the fluorine-containing monomer polymerization. The chain transfer agent is at least one selected from alcohol small molecule compounds, ether small molecule compounds, ester small molecule compounds, sulfur alcohol small molecule compounds, or halogen-containing organic compounds. A mount of the chain transfer agent used in the emulsion polymerization reaction is in a range of 0.005 wt% to 5 wt% of the total amount of the polymerization monomers.

The method for preparing the surfactant of the present disclosure includes a step of subjecting the hydrophobic monomer as shown in formula (1) and the hydrophilic monomer as shown in formula (2) to polymerization reaction in a solvent containing an initiator to obtain the surfactant. The formula (1) and the formula (2) are the same as those defined in the first aspect.

The method for preparing the surfactant are the same as that in the second aspect of the present disclosure, which will not be repeated herein.

Compared to the related art, the fluorine-containing polymer of the present disclosure has following advantages.

1) Compared to the surfactant used for fluorine-containing monomer polymerization in the related art, the amount of the surfactant of the present disclosure used in the polymerization reaction is greatly decreased, so that the following washing process will be more convenient.
2) The surfactant of the present disclosure can be used to replace the PFOA type fluorine-containing surfactant, so as to solve the problem that the PFOA type fluorine-containing surfactant pollutes the environment.
3) The surfactant of the present disclosure can be used to replace the hydrophilic comonomer surfactant, so as to solve the problem that the generated fluorine-containing polymer includes hydrophilic groups that cannot be separated from the fluorine-containing polymer.
4) The surfactant of the present disclosure can be used to replace multiple-block copolymer surfactant, so as to improve the exchange rate between the liquid and the gas, thereby improving the production efficiency.

In a fifth aspect of the present disclosure, the applicant of the present disclosure finds that when the HLB value of the surfactant is greater than 7 and other polymerization conditions does not change, the particle size of the emulsion of the fluorine-containing polymer can be adjusted in a range of 100 nm to 250nm by only changing the average degree of polymerization of the polyethylene glycol segment in the surfactant. Since the steric exclusion of the surfactant from the hydrophilic segments on the surface of the emulsion is affected by the average degree of polymerization of the polyethylene glycol, the particle size of the emulsion will change accordingly under the same polymerization conditions when the average degree of polymerization of the polyethylene glycol is increased or decreased. At the same time, when the hydrophile-lipophile balance (HLB) value of the surfactant changes, the steric exclusion of the hydrophilic segments

are also affected, and the particle size of the emulsion may change accordingly. Under the synergistic effect of the average degree of polymerization of the polyethylene glycol and the HLB value of the surfactant, the particle size of the fluorine-containing polymer emulsion can be adjusted in a range of 100 nm to 250 nm.

The present disclosure further provides a method for adjusting a particle size of a fluorine-containing polymer. The method for adjusting the particle size of the fluorine-containing polymer includes following steps: subjecting a polymerization monomer to a polymerization reaction to obtain a fluorine-containing polymer with a particle size of an emulsion in a range of 100 nm to 250 nm in an aqueous medium containing the surfactant.

The surfactant is a multi-block copolymer with a block number greater than 5, and in each block of the surfactant. A block length of a hydrophobic monomer structural unit is in a range of 1 to 10, or a block length of a hydrophilic monomer structural unit is in a range of 1 to 10.

The surfactant is at least one of copolymers including a polyethylene glycol chain segments, wherein a hydrophile-lipophile balance value HLB of the surfactant is in a range of 8 to 16.

An average degree of polymerization of the polyethylene glycol chain segments is greater than 4 and smaller than and equal to 100.

Optionally, the hydrophile-lipophile balance value HLB of the surfactant is in a range of 9 to 12, and the average degree of polymerization of the polyethylene glycol chain segments is greater than 9 and smaller than and equal to 50.

In the present disclosure, the particle size of the fluorine-containing polymer will decrease along with increase of average degree of polymerization of the polyethylene glycol segment in the surfactant. The greater the average degree of polymerization of the polyethylene glycol segment is, the less the particle size of the corresponding fluorine-containing polymer is, and the more stable the emulsion is.

In the present disclosure, the surfactant can generate the single molecule micelle structure in water, and can be adsorbed onto an interface of polymer particles to form an amphoteric film-like structure. The micelle structure can be switched to the film-like structure when some conformation of the main chain is changed. The special structure enables the surfactant to have low interfacial energy and good mobility at the same time, increasing the material exchange rate, and promoting a polymerization reaction. In addition, the surfactant in the present disclosure can reduce side reactions of emulsion polymerization reactions, improve interfacial wettability, increase steric hindrance of a surface hydration layer, and improve stability of a disperse system.

In the present disclosure, the surfactant is selected at least one of copolymers containing the polyethylene glycol segments. The surfactant can be the surfactant in the first aspect of the present disclosure, which will not be repeated herein.

In the present disclosure, the HLB value of the surfactant is in a range of 8 to 16. In consideration of a plurality of aspects such as improving a rate of emulsion polymerization, reducing side reactions of emulsion polymerization, improving wettability of a water-oil interface, increasing the steric hindrance of the hydrated surface, and improving stability of the dispersing system, optionally, the HLB value of the surfactant is in a range of 9 to 12.

An amount of the surfactant added in the polymerization reaction is the same as the amount of the surfactant added in the emulsion polymerization reaction in the third aspect of the present disclosure, which will not be repeated herein.

In the present disclosure, the polymerization monomer is a fluorine-containing monomer or a mixture of a fluorine-containing monomer and a fluorine-free monomer. The fluorine-containing monomer and the fluorine-free monomer are the same as those in the third aspect of the present disclosure, which will not be repeated herein.

In the present disclosure, the fluorine-containing polymer is any polymer containing a fluorine atom. The fluorine-containing polymer can be the fluorine-containing polymers in the third aspect of the present disclosure, which will not be repeated herein.

In the present disclosure, a number-average molecular weight of the fluorine-containing polymer is greater than or equal to 100000. Optionally, the number-average molecular weight of the fluorine-containing polymer is greater than or equal to 200000. The number-average molecular weight of the fluorine-containing polymer is mainly affected by polymerization processing.

The method for preparing the surfactant is the same as that in the second aspect of the present disclosure, which will not be repeated herein.

Compared to the related art, the method for adjusting the particle size of the fluorine-containing polymer emulsion has following advantages.

(1) When other polymerization conditions does not change, the particle size of the emulsion of the fluorine-containing polymer can be adjusted in a range of 100 nm to 250nm by only changing the hydrophile-lipophile balance value HLB of the surfactant and the average degree of polymerization of the polyethylene glycol segment in the surfactant.

(2) The surfactant of the present disclosure can be used to replace the PFOA type fluorine-containing surfactant, so as to solve the problem that the PFOA type fluorine-containing surfactant pollutes the environment.

(3) The surfactant of the present disclosure can be used to replace the hydrophilic comonomer surfactant, so as to

solve the problem that the generated fluorine-containing polymer includes hydrophilic groups that cannot be separated from the fluorine-containing polymer.

(4) The surfactant of the present disclosure can be used to replace multiple-block copolymer surfactant, so as to improve the exchange rate between the liquid and the gas, thereby improving the production efficiency.

In a sixth aspect of the present disclosure, a fluorine-containing polymer emulsion with a small particle size can be prepared with the surfactant of the present disclosure and ionic compounds participated in the emulsion polymerization reaction.

In the present disclosure, the surfactant can generate the single molecule micelle structure in water, and can be adsorbed onto an interface of polymer particles to form an amphoteric film-like structure. The micelle structure can be switched to the film-like structure when some conformation of the main chain is changed. The special structure enables the surfactant to have low interfacial energy and good mobility at the same time, increasing the material exchange rate, and promoting a polymerization reaction. In addition, the surfactant in the present disclosure can reduce side reactions of emulsion polymerization reactions, improve interfacial wettability, increase steric hindrance of a surface hydration layer, and improve stability of a disperse system.

In the present disclosure, the surfactant cooperates with the ionic compounds participated in the emulsion polymerization reaction to prepare the fluorine-containing polymer having a particle size in a range of 70 nm to 100 nm, which is because of the steric hindrance of the hydrophilic segments in the surfactant and the interfacial potential of ionic groups in the ionic compounds. In an interfacial layer of a hydrated layer generated by the hydrophilic segments having high steric hindrance, increasing the interfacial potential can avoid polymerization of the emulsion particles, and can lower the interfacial energy between the polymer and water.

The present disclosure further provides a method for preparing a fluorine-containing polymer with a small particle size. The method includes following steps: subjecting a polymerization monomer to an emulsion polymerization reaction to obtain a fluorine-containing polymer emulsion with a particle size in a range of 70 nm to 100 nm in an aqueous medium containing the surfactant.

An ionic molecules are subjected to the emulsion polymerization reaction, and the ionic molecules are bonded to a molecular chain of a fluorine-containing polymer.

An amount of the ionic molecules is in a range of 0.001 wt% to 5 wt% of an amount of the generated fluorine-containing polymer.

The surfactant is a multi-block copolymer with a block number of greater than 5, and in each block of the surfactant, a block length of a hydrophobic monomer structural unit is in a range of 1 to 10, or a block length of a hydrophilic monomer structural unit is in a range of 1 to 10.

The surfactant is the surfactant of the first aspect, which will not be repeated herein.

In the present disclosure, the ionic molecules can be bonded to a molecular chain of a fluorine-containing polymer. When the ionic compounds are bonded to a molecular chain of the fluorine-containing polymer, the ionic compounds can play a role of a polymer chain transfer agent. The ionic compounds can be selected from at least one of carboxylic acid oligomers, sulfonic acid oligomers, phosphoric acid oligomers, imidazolium oligomers, pyrazolium oligomers, phosphonium oligomers, phosphonium oligomers, and sulphobetaine oligomers, carboxybetaine oligomers or quaternary oligomers. In the present disclosure, the oligomers are compounds having a number-average molecular weight in a range of 50 g/mol to 5000 g/mol. Optionally, the ionic molecules are at least one of sodium polyacrylate, sodium polymethacrylate, lithium polyacrylate, lithium polymethacrylate, ammonium polyacrylate, ammonium polymethacrylate, polyquaternium-1 to 51, sodium polystyrene sulfonate, lithium polystyrene sulfonate, or ammonium polystyrene sulfonate.

When the ionic molecules are bonded to a molecular chain of the fluorine-containing polymer, the ionic compounds can play a role of a compolymerization monomer. The ionic molecules are at least one of salts of acrylic acid, ionic acrylates, salts of methacrylic acid, ionic methacrylates, ionic allyl alcohol esters, ionic allyl alcohol ethers, ionic vinyl ethers, salts of fumaric acid monoester, salts of itaconate acid or salts of 10-undecenate acid.

In the present disclosure, the amount of the ionic molecules is in a range of 0.005 wt% to 5 wt% of the amount of generated fluorine-containing polymer. Optionally, the amount of the ionic molecules is in a range of 0.01 wt% to 0.1 wt% of the amount of generated fluorine-containing polymer.

In the present disclosure, the HLB value of the surfactant is in a range of 8 to 16. In consideration of a plurality of aspects such as improving a rate of emulsion polymerization, reducing side reactions of emulsion polymerization, improving wettability of a water-oil interface, increasing the steric hindrance of the hydrated surface layer and improving stability of the dispersion system, optionally, the HLB value of the surfactant is in a range of 10 to 12.

In the present disclosure, the amount of the surfactant used in the polymerization reaction is the same as the amount of the surfactant used in the emulsion polymerization in the third aspect of the present disclosure, which will not be repeated herein.

In the present disclosure, the polymerization monomer is a fluorine-containing monomer or a mixture of a fluorine-containing monomer and a fluorine-free monomer. In the present disclosure, the fluorine-containing monomer

and the fluorine-free monomer are the same as those in the third aspect of the present disclosure, which will not be repeated herein.

In the present disclosure, the fluorine-containing polymer is any fluorine-containing polymer. The fluorine-containing polymer can be the same as those in the third aspect of the present disclosure, which will not be repeated herein.

In the present disclosure, a number-average molecular weight of the fluorine-containing polymer is greater than 170000. Optionally, the number-average molecular weight of the fluorine-containing polymer is greater than 200000. Optionally, the number-average molecular weight of the fluorine-containing polymer is greater than 1000000. The number-average molecular weight of the fluorine-containing polymer is mainly affected by the polymerization processing. In the present disclosure, when the ionic compounds are not added in the emulsion polymerization reaction, the particle size of the emulsion can be adjusted to less than 100 nm with improving the amount of the surfactant, but the number-average molecular weight of the fluorine-containing polymer is relative low and the fluorine-containing polymer with high number-average molecular weight cannot be prepared.

A use of the fluorine-containing polymer emulsion having a small particle size is further provided in the present disclosure, wherein the fluorine-containing polymer emulsion having the small particle size is used as a component in coatings, binders, rubber, 3D printing materials, diaphragm coatings, water treatment membranes, composite additives, microgels or structural adhesives for electronic products.

The method for preparing the surfactant is the same as that in the second aspect of the present disclosure, which will not be repeated herein.

Compared to the related art, fluorine-containing polymer emulsion with a small particle size in the present disclosure has following advantages.

(1) In the present disclosure, the particle size of the fluorine-containing polymer with a small particle size is in a range of 70 nm to 100 nm, and a number-average molecular weight of the fluorine-containing polymer is greater than 170000 at the same time.
(2) The surfactant can be used to replace the PFOA type fluorine-containing surfactant, so as to solve the problem that the PFOA type fluorine-containing surfactant pollutes the environment.
(3) In the present disclosure, the ionic oligomer is used as a chain transfer agent to replace a small molecule, which can improve the grafting efficiency of the ionic groupings and avoid an upper limit of the molecular weight of the polymer caused by using a great amount of the surfactant and the water-soluble initiator.
(4) In the present disclosure, ionic copolymer monomers can be used, so as to add a small amount of polar emulsion stabilizer particles into the emulsion.

## BRIEF DESCRIPTION OF THE DRAWINGS

FIG. 1 is a structural schematic diagram of a surfactant in the related art. In the related art, the hydrophilic monomers are disposed by points, 1 represents a hydrophobic segment, and 2 represents a hydrophilic segment.
FIG. 2 is a structural schematic diagram of a surfactant of the present disclosure, in which 1 represents a hydrophobic segment, and 2 represents a hydrophilic segment.
FIG. 3 is a schematic diagram of a single molecule micelle generated by a surfactant in water in the present disclosure, in which 1 represents a hydrophobic segment, and 2 represents a hydrophilic segment.
FIG. 4 is a schematic diagram of an amphoteric film generated by a surfactant being adsorbed on a fluorine-containing polymer interface in the present disclosure, in which 1 represents a hydrophobic segment, and 2 represents a hydrophilic segment.
FIG. 5 is a schematic diagram showing a principle of adjusting a particle size of a fluorine-containing polymer emulsion in the present disclosure, in which 1 represents a hydrophobic segment, and 2 represents a hydrophilic segment.
FIG. 6 is a SEM photo of a fluorine-containing polymer prepared in embodiment III-1.
FIG. 7 is a SEM photo of a fluorine-containing polymer prepared in embodiment III-2.
FIG. 8 is a SEM photo of a fluorine-containing polymer prepared in embodiment III-3 .
FIG. 9 is a SEM photo of a fluorine-containing polymer prepared in embodiment III-4.
FIG. 10 is a SEM photo of a fluorine-containing polymer prepared in embodiment III-5.
FIG. 11 is a graph showing a relationship between a particle size of a fluorine-containing polymer and a structure of a surfactant in embodiment III-1 to III-4, wherein the particle size of the fluorine-containing polymer and an average chain length of the polyethylene glycol (i.e. an average degree of polymerization) satisfy a following equation: particle size = -7.5×average chain length of the polyethylene glycol + 262.7, and $R2=0.9593$.
FIG. 12 is a SEM photo of a fluorine-containing polymer prepared in embodiment IV-1.

FIG. 13 is a SEM photo of a fluorine-containing polymer prepared in embodiment IV-2.
FIG. 14 is a SEM photo of a fluorine-containing polymer prepared in comparative embodiment IV-1.
FIG. 15 is a SEM photo of a fluorine-containing polymer prepared in comparative embodiment IV-2.

## DETAILED DESCRIPTION

The disclosure is further described below in connection with specific embodiments, but does not limit the application to these specific embodiments. Those skilled in the art should recognize that the present disclosure covers all alternatives, improvements and equivalents that may be included within the scope of the claims.
In the present disclosure, Mn represents a number-average molecular weight of a polymer; PDI represents a polymer dispersity index of a polymer, the greater the PDI is, the wider the molecular weight of the polymer is disposed; the less the PDI is, the more uniform the molecular weight of the polymer is disposed.
PLURONIC 31R1 is a bifunctional multi-block copolymers with terminal secondary hydroxyl groups, and is a nontoxic non-ionic surfactant purchased from BASF.
Rh represents hydrodynamic radius. A particle size (hydrodynamic radius) of the micelle of the surfactant of the present disclosure in an aqueous medium is similar to that in isopropanol. It can be concluded that most of the micelle generated by the surfactant in the aqueous medium are single molecule micelle. When the particle size (hydrodynamic radius) of the micelle of the surfactant of the present disclosure in an aqueous medium is greatly different from that in isopropanol, it can be concluded that the surfactant folds in the aqueous medium, and the content of the single molecule micelle is low. The hydrodynamic radius is tested by HORIBA/SZ-100Z2.
V-50 represents an azo-disobutamidine hydrochloride initiator.

### I. Preparation of surfactant

### Embodiment I-1

A surfactant A1 is prepared with methyl methacrylate and polyethylene glycol methyl ether methacrylate.
Methyl methacrylate (4.0 g), polyethylene glycol methyl ether methacrylate (the degree of polymerization was 20, the molecular weight was about 950, 6.0 g), isopropanol (5.0 g) were added into a three-neck flask and heated to 80 °C under stirring. Air in the three-neck flask has been displaced with nitrogen in vacuum before adding the materials. After the temperature was constant, dimethyl azodiisobutyrate (0.60 g) was added, heated and stirred for 15 h, until the monomer and the initiator were totally reacted(the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn of the surfactant was 64200, PDI of the surfactant was1.89, the particle sized of the micelle generated by the surfactant in water was 11.6nm, and the hydrodynamic radius $R_h$ of the surfactant in isopropanol was 16.3nm.

### Embodiment I-2

A surfactant A2 was prepared with methyl methacrylate and polyethylene glycol methyl ether methacrylate.
Methyl methacrylate (2.5 g), polyethylene glycol methyl ether methacrylate (the degree of polymerization was 9, the molecular weight was about 475, 2.5 g) and isopropanol (5.0 g) were added into a three-neck flask and heated to 90 °C under stirring. Air in the three-neck flask has been displaced with nitrogen in vacuum before adding the materials. After the temperature was constant, dimethyl azodiisobutyrate (0.30 g) was added, heated and stirred for 8 h, until the monomer and the initiator were totally reacted (the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn of the surfactant was 48300, PDI of the surfactant was 1.79, the particle sized of the micelle generated by the surfactant in water was 15.8nm, and the hydrodynamic radius $R_h$ of the surfactant in isopropanol was 12.6nm.

### Embodiment I-3

*Tert*-butyl methacrylate and polyethylene glycol methyl ether methacrylate were applied to prepare surfactant A3.
T*ert*-butyl methacrylate (4.0 g), polyethylene glycol methyl ether methacrylate (the degree of polymerization was 20, the molecular weight was about 950, 6.0 g) and isopropanol (5.0 g) were added into a three-neck flask and heated to 90 °C under stirring. Air in the three-neck flask has been displaced with nitrogen in vacuum before adding the materials. After the temperature was constant, dimethyl azodiisobutyrate (0.60 g) was added, heated and stirred for 8 h, until the monomer

and the initiator were totally reacted (the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn of the surfactant was 53500, PDI of the surfactant was 1.93, the particle sized of the micelle generated by the surfactant in water was 13.3nm, and the hydrodynamic radius $R_h$ of the surfactant in isopropanol was 13.8nm.

### Embodiment I-4

*Tert*-butyl methacrylate and polyethylene glycol methyl ether methacrylate were used to prepared surfactant A4.

*Tert*-butyl methacrylate (2.0 g), polyethylene glycol methyl ether methacrylate (the degree of polymerization was 9, the molecular weight was about 475, 3.0 g) and isopropanol (5.0 g) were added into a three-neck flask and heated to 90 °C under stirring. Air in the three-neck flask has been displaced with nitrogen in vacuum before adding the materials. After the temperature was constant, dimethyl azodiisobutyrate(0.30 g) was added, heated and stirred for 8 h, until the monomer and the initiator were totally reacted (the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn of the surfactant was 50400, PDI of the surfactant was 1.75, the particle sized of the micelle generated by the surfactant in water was 11.9nm, and the hydrodynamic radius $R_h$ of the surfactant in isopropanol was 13.5nm.

### Embodiment I-5

*Tert*-butyl methacrylate and polyethylene glycol methacrylate were used to prepare surfactant A5.

*Tert*-butyl methacrylate(2.0 g), polyethylene glycol methacrylate (the degree of polymerization was 10, the molecular weight was about 500, 3.0 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate(0.30 g) was added, heated and stirred for 8 h, until the monomer and the initiator were totally reacted (the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn = 62300, PDI = 1.83, the particle sized of the micelle generated by the surfactant in water was 10.9 nm, and the hydrodynamic radius $R_h$ of the surfactant in isopropanol was 15.9 nm.

### Embodiment I-6

Phenyl methacrylate and polyethylene glycol methyl ether methacrylate were used to prepare surfactant A6.

Phenyl methacrylate (4.0 g), polyethylene glycol methyl ether methacrylate (the degree of polymerization was 20, the molecular weight was about 950, 6.0 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h, until the monomer and the initiator were totally reacted (the conversion rate was greater than 99%). Pure water (85 g) was added in the resultant, stirred until all of the resultant was dissolved. Then the resultant was kept and cooled to room temperature to obtain a solution containing the surfactant. The surfactant was tested, Mn = 46800, PDI= 1.88, the particle sized of the micelle generated by the surfactant in water was 14.2nm, and the hydrodynamic radius $R_h$ of the surfactant in isopropanol was 12.3nm.

### Comparative embodiment I-1

1-Methacrylate-methyldodecyl group and polyethylene glycol methyl ether methacrylate were used to prepare copolymer A7.

1-Methacrylate-methyldodecyl group (4.0 g), polyethylene glycol methyl ether methacrylate (the degree of polymerization was 9, the molecular weight was about 475, 6.0 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h, until the monomer and the initiator were totally reacted (the conversion rate was greater than 99%). Pure water (85 g) was added in the resultant, stirred until all of the resultant was dissolved. Then the resultant was kept and cooled to room temperature to obtain a solution containing the copolymer. The copolymer was tested, Mn of the copolymer was51300, PDI of the copolymer was 1.91, the particle sized of the micelle generated by the copolymer in water was 98.3nm, and the hydrodynamic radius $R_h$ of the copolymer in isopropanol was 14.0 nm.

Performances of the surfactants prepared in embodiments I-1 to I-5 and the comparative embodiment I-1 were shown in table 1.

Table 1 Performances of the surfactants prepared in embodiments I-1 to I-5 and the comparative embodiment I-1 were shown in table 1.

| | hydrophobic monomer | hydrophilic monomer | x/y | HLB value | degree of polymerization of polyethylene glycol segments (q value) | Particle size of micelle in water, nm | $R_h$ of the surfactant in isopropanol, nm | Mn | PDI |
|---|---|---|---|---|---|---|---|---|---|
| Embodiment I-1 | methyl methacrylate | polyethylene glycol methyl ether methacrylate, 950 | 6.3 | 11.1 | 20 | 11.6 | 16.3 | 64200 | 1.89 |
| Embodiment I-2 | | polyethylene glycol methyl ether methacrylate, 475 | 4.7 | 8.5 | 9 | 15.8 | 12.6 | 48300 | 1.79 |
| Embodiment I-3 | *tert*-butyl methacrylate | polyethylene glycol methyl ether methacrylate, 950 | 4.5 | 11.1 | 20 | 13.3 | 13.8 | 53500 | 1.93 |
| Embodiment I-4 | | polyethylene glycol methyl ether methacrylate, 475 | 2.2 | 10.2 | 9 | 11.9 | 13.5 | 50400 | 1.75 |
| Embodiment I-5 | *tert*-butyl methacrylate | polyethylene glycol methacrylate, 500 | 2.3 | 10.3 | 10 | 10.9 | 15.9 | 62300 | 1.83 |
| Embodiment I-6 | phenyl methacrylate | polyethylene glycol methyl ether methacrylate 950 | 3.7 | 11.1 | 20 | 14.2 | 12.3 | 46800 | 1.88 |
| comparative embodiment I-1 | Dodecyl methacrylate | polyethylene glycol methyl ether methacrylate, 475 | 1.2 | 10.2 | 9 | 98.3 | 14.0 | 51300 | 1.91 |

It can be concluded from Table 1 that in embodiment I-1 to embodiment I-6, the R3 groups of the hydrophobic monomers were phenyl group, methyl group and *tert*-butyl group, the degrees of polymerization of polyethylene glycol in R6 group of the hydrophilic monomer were 9, 10 and 20, the Mn values of the generated surfactant was in a range of 46800 to 64200, and the generated surfactant can generate single molecule micelle structures in water. The particle sizes of the micelles generated by the surfactants in water were in a range of 10.9 nm to 15.8 nm. The surface activity of the surfactant is well and can be used as emulsifier for preparing polymerization emulsion with different particle sizes. In comparative embodiment I-1, the R3 groups of the hydrophobic monomers were 1-methyldodecyl group. Since the volume of the 1-metyldodecyl group is too large, the mobility of the main chain is poor and the surface performance of the surfactant is decreased. Thus, although Mn value of the surfactant was 51300, the surfactant obtained in comparative embodiment I-1 generated polymolecular micelle in water, and the particle size of the micelle was 98.3 nm, the surface activity of the surfactant was poor, and the surfactant is not suitable to be used as an emulsifier in preparing the polymer.

**The surfactant of the present disclosure was used as an emulsifier to prepare a fluorine-containing polymer.**

**Application embodiment I-1**

The surfactant A1 prepared in embodiment I-1 was used as an emulsifier to prepare PVDF.

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and the surfactant A1 (150 g, the content of the surfactant was 0.1 wt%, the content of the isopropanol was 0.05 wt%) prepared in embodiment I-1 was added into the polymerization kettle by a piston pump. The resultant was stirred at 700 rpm and heated to 80 °C. After the temperature was constant for 5 minutes, vinylidene fluoride (100 g) was added into the polymerization kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature (80 ± 0.5 °C) in the polymerization kettle was kept still, and vinylidene fluoride was added into the polymerization kettle to keep the pressure (4.25 ± 0.25 MPa) in the kettle, until the vinylidene fluoride achieved the feeding target (600 g). Then the stirring stopped and a relief valve was opened, and an emulsion (2076 g, the content of the solid component was 20.0 wt%) was collected when the pressure lowered to an ordinary pressure. A total amount of the demulsifying substance was 0.16 wt% of the mass of the polymer. An average particle size of the generated polyvinylidene difluoride was tested under SEM, and the average particle size of the polyvinylidene difluoride was 125 nm. A viscosity of a 7wt% NMP solution of the generated polyvinylidene difluoride was 1280 cp (the shearing rate was 2.325 $s^{-1}$).

**Application embodiment** I-2

The surfactant A3 prepared in embodiment I-3 was used as an emulsifier to prepare PVDF-HFP.

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, hexafluoropropylene (80 g) was added into the polymerization kettle with a high-pressure gas cylinder, and the surfactant A3 (150 g, the content of the surfactant was 0.1 wt%, the content of isopropanol was 0.3 wt%) prepared in embodiment I-3 was added into the polymerization kettle by a piston pump. The resultant was stirred at 700 rpm and heated to 100 °C. After the temperature was constant for 5 minutes, vinylidene fluoride (196 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (100 ± 0.5 °C), the ammonium persulfate solution (1 wt%) was continuously added into the polymerization kettle to keep a consumption amount of the monomer greater than 3 g/min, and vinylidene fluoride was added to the polymerization kettle to keep the pressure (4.25 ± 0.25 MPa), until the vinylidene fluoride achieved the feeding target (620 g). Then the stirring stopped and a relief valve was opened, and an emulsion (2290 g, the content of the solid component was 24.7 wt%) was collected when the pressure lowered to an ordinary pressure. A total amount of the demulsifying substance was 0.02 wt% of the mass of the polymer. An average particle size of the generated PVDF-HFP was tested under SEM, and the average particle size of the PVDF-HFP was 134 nm.

**Application comparative embodiment I-1**

The surfactant A7 prepared in comparative embodiment I-1 was used as an emulsifier to prepare PVDF.

The differences between application embodiment I-1 and application comparative embodiment are shown herein. The copolymer A7 (150 g, the content of the copolymer was 0.1 wt%, the content of isopropanol was 0.3 wt%) prepared in comparative embodiment I-1 was used to replace the surfactant A1 (150 g, the content of the surfactant was 0.1 wt%, the content of isopropanol was 0.3 wt%) prepared in embodiment I-1. The stirring stopped and a relief valve was opened, and an emulsion (1984 g, the content of the solid component was 15.8 wt%) was collected when the pressure lowered to an ordinary pressure. A total amount of the demulsifying substance was 16.2 wt% of the mass of the polymer. An average particle size of the generated polyvinylidene difluoride was tested under SEM, and the average particle size of the polyvinylidene difluoride was 243 nm. A viscosity of a 7wt% NMP solution of the generated polyvinylidene difluoride was 770 cp (the shearing rate was 2.325 $s^{-1}$).

**Application comparative embodiment** I-2

PFOA was used as an emulsifier to prepare PVDF.

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted PFOA solution (150 g, the content of the surfactant was 0.9 wt%, the content of the ethyl acetate was 0.05 wt%) was added into the polymerization kettle by a piston pump. The resultant was stirred at 700 rpm and heated to 80 °C. After the temperature was constant for 5 minutes, vinylidene fluoride monomers (74 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature (80 $\pm$ 0.5 °C) in the polymerization kettle was kept still, and vinylidene fluoride monomers were added into the polymerization kettle to keep the pressure (4.25 $\pm$ 0.25 MPa) in the polymerization kettle, until the monomers achieved the feeding target (600 g). Then the stirring stopped and a relief valve was opened, and an emulsion (2022 g, the content of the solid component was 22.4 wt%) was collected when the pressure lowered to an ordinary pressure. A total amount of the demulsifying substance was 0.10 wt% of the mass of the polymer. An average particle size of the generated polyvinylidene difluoride was tested under SEM, and the average particle size of the polyvinylidene difluoride was 132 nm. A viscosity of a 7wt% NMP solution of the generated polyvinylidene difluoride was 2896 cp (the shearing rate was 2.325 $s^{-1}$).

**Application comparative embodiment I-3**

A multi-block copolymer was used as an emulsifier to prepare PVDF.

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted PLURONIC 31R1 solution (150 g, the content of the surfactant was 0.6 wt%, the content of the ethyl acetate was 0.05 wt%) was added into the polymerization kettle by a piston pump. The resultant was stirred at 700 rpm and heated to 80 °C. After the temperature was constant for 5 minutes, vinylidene fluoride monomer (82 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 $\pm$ 0.5 °C), and vinylidene fluoride monomer was added into the polymerization kettle to keep the pressure (4.25 $\pm$ 0.25 MPa) in the kettle, until the monomer achieved the feeding target (600 g). Then the stirring stopped and a relief valve was opened, and an emulsion (2002 g, the content of the solid component was 23.2 wt%) was collected when the pressure lowered to an ordinary pressure. A total amount of the demulsifying substance was 1.2 wt% of the mass of the polymer. An average particle size of the generated polyvinylidene difluoride was tested under SEM, and the average particle size of the polyvinylidene difluoride was 198 nm. A viscosity of a 7wt% NMP solution of the generated polyvinylidene difluoride was 1152 cp (the shearing rate was 2.325 $s^{-1}$).

The fluorine-containing polymers prepared in the application embodiments and the application comparative embodiments were tested, and performances of the fluorine-containing polymers prepared in the application embodiments and the application comparative embodiments were shown in Table 2.

Table 2 performances of the fluorine-containing polymers prepared in the application embodiments and the application comparative embodiments

| | Polymer | Emulsifier | | | Particle size of the emulison, nm | Content of the solid component in the emulsion, wt% | Amount of the demulsifying substance, wt% | Induction period (min) |
|---|---|---|---|---|---|---|---|---|
| | | Kind | Weight, g | Amount of the emulsifier in the generate polymer, wt% | | | | |
| Application embodiment I-1 | PVDF | A1 | 0.15 | 0.036 | 125 | 20 | 0.16 | 15 |
| Application embodiment I-2 | PVDF-HFP | A3 | 0.15 | 0.027 | 134 | 24.7 | 0.02 | 10 |
| Application comparative embodiment I-1 | PVDF | A7 | 0.15 | 0.048 | 243 | 15.8 | 16.2 | 50 |
| Application comparative embodiment I-2 | PVDF | PFOA | 1.35 | 0.298 | 132 | 22.4 | 0.1 | 5 |
| Application comparative embodiment I-3 | PVDF | PLURONIC 31R1 | 0.9 | 0.193 | 198 | 23.2 | 1.2 | 30 |

It can be concluded from Table 2 that in application embodiment I-1 and application embodiment I-2, the surfactants of the present disclosure were used, the amount of the surfactant of used in the polymerization was in a range of 0.01 wt% to 0.1wt% of the generated polymer, the contents of the solid of the generated emulsion polymer were high, and the amount of the demulsifying substance in the emulsion was low. In application comparative embodiment I-1, 1-methyldodecyl methacrylate was used as the hydrophobic monomer for preparing the surfactant. The particle size of a micelle generated by the surfactant of the application comparative embodiment I-1 in water was 98.3 nm, the content of the solid of the generated emulsion polymer was low, and the amount of the demulsifying substance in the emulsion was high. The surfactant of the application comparative embodiment I-1 was not suitable to be used as an emulsifier. Compare application comparative embodiment I-2 to application embodiment I-1, although the content of the solid component in the polymer emulsion and the demulsifying substance in the polymer emulsion were similar, the amount of PFOA used in application comparative embodiment I-2 was 8.3 times of which in application embodiment I-1 (relative to the amount of the generated polymer). Compare application comparative embodiment I-3 to application embodiment I-1, the amount of the PLURONIC 31R1 used in the application comparative embodiment I-3 was 5.4 times of the surfactant used in the application embodiment I-1 (relative to the amount of the generated polymer), and the amount of the demulsifying substance in the polymer emulsion of application comparative embodiment I-3 was 7.5 times of the demulsifying substance in the polymer emulsion of application embodiment I-1.

Compared to PFOA, the surfactants of the application embodiment I-1 and application embodiment I-2 were hypotoxic.

Compared to the multi-block surfactant PLURONIC 31R1, induction periods of the application embodiment I-1 and application embodiment I-2 were shorted for 2 times to 3 times, and the polymerization rate was fast.

**II, preparation of surfactant**

**Methyl methacrylate and polyethylene glycol methyl ether methacrylate (the molecular weight was about 950, *q* value was 20) were used as monomers to prepare surfactant B1.**

Methyl methacrylate (4.0 g), polyethylene glycol methyl ether methacrylate (the molecular weight was about 950, 6.0 g) and isopropanol (5.0 g) were added into a three-neck flask and heated to 80 °C under stirring. Air in the three-neck flask has been displaced with nitrogen in vacuum before adding the raw materials. After the temperature was constant, dimethyl azodiisobutyrate(0.60 g) was added, heated and stirred for 15 h, until the monomer and the initiator were totally reacted (the conversion rate was greater than 99%). Pure water (85 g) was added in the resultant, and stirred until the resultant was totally dissolved. The resultant was cooled to room temperature to obtain a surfactant B1 solution, which can be directly used in polymerization of a fluorine-containing polymer. The surfactant B1 was tested, surfactant B1, Mn of the surfactant B1 was64200, PDI of the surfactant B1 was 1.89, HLB value of the surfactant B1 was 11.1, and a molar ratio of methyl methacrylate and polyethylene glycol methyl ether methacrylate in the surfactant B 1 was 6.3.

***Tert*-butyl methacrylate and polyethylene glycol methyl ether methacrylate (the molecular weight was about 950, q value was 20) were used as monomers to prepare surfactant B2.**

*Tert*-butyl methacrylate(4.0 g), polyethylene glycol methyl ether methacrylate (the molecular weight was about 950, 6.0 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate(0.60 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant B2 solution, which can be directly used in polymerization of a fluorine-containing polymer. The surfactant B2 was tested, Mn of the surfactant B2 was 53500, PDI of the surfactant B2 was 1.93, HLB value of the surfactant B2 was 11.1, and a molar ratio of tert-butyl methacrylate to polyethylene glycol methyl ether methacrylate in the surfactant B2 was 4.5.

***Tert*-butyl methacrylate and polyethylene glycol methyl ether methacrylate (the molecular weight was about 950, q value was 20) were used as monomers to prepare surfactant B3.**

Differences between the method for preparing surfactant B3 and the method for preparing the surfactant B2 were shown herein. Tertiary butanol was used to replace isopropanol. The surfactant B3 was tested, Mn of the surfactant B3 was 43300, PDI of the surfactant B3 was 1.86, HLB value of the surfactant B3 was 11.1, and a molar ratio of tert-butyl methacrylate to polyethylene glycol methyl ether methacrylate in the surfactant B3 was 4.5.

***Tert*-butyl methacrylate and polyethylene glycol methyl ether methacrylate** (the **molecular weight was about 950, q value was 20) were used as monomers to prepare surfactant B4.**

Differences between the method for preparing surfactant B4 and the method for preparing the surfactant B2 were shown herein. Ethyl acetate was used to replace isopropanol. The surfactant B4 was tested, Mn of the surfactant B4 was 46300, PDI of the surfactant B4 was 1.95, HLB value of the surfactant B4 was 11.1, and a molar ratio of *tert*-butyl methacrylate to polyethylene glycol methyl ether methacrylate in the surfactant B4 was 4.5.

**Methyl methacrylate, polyethylene glycol methyl ether methacrylate (the molecular weight was about 475, *q* value was 9) were used as monomers to prepare surfactant B5.**

Methyl methacrylate (2.5 g), polyethylene glycol methyl ether methacrylate (the molecular weight was about 475, 2.5 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.30 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant B5 solution, which can be directly used in polymerization of a fluorine-containing polymer. The surfactant B5 was tested, Mn of the surfactant B5 was 48300, PDI of the surfactant B5 was 1.79, HLB value of the surfactant B5 was 8.5, and a molar ratio of tert-butyl methacrylate to polyethylene glycol methyl ether methacrylate in the surfactant B5 was 4.7.

***Tert*-butyl methacrylate, polyethylene glycol methyl ether methacrylate (the molecular weight was about 475, *q* value was 9) were used as monomers to prepare surfactant B6.**

*Tert*-butyl methacrylate (2.0 g), polyethylene glycol methyl ether methacrylate (the molecular weight was about 475, 3.0 g) and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.30 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant B6 solution, which can be directly used in polymerization of a fluorine-containing polymer. The surfactant B6 was tested, Mn of the surfactant B6 was 50400, PDI of the surfactant B6 was 1.75, HLB value of the surfactant B6 was 10.2, and a molar ratio of *tert*-butyl methacrylate to polyethylene glycol methyl ether methacrylate was 2.2.

**Phenyl methacrylate, polyethylene glycol methyl ether methacrylate (the molecular weight was about 950, *q* value was 20) were used as monomers to prepare surfactant B7.**

Phenyl methacrylate (4.0 g), polyethylene glycol methyl ether methacrylate (degree of polymerization 20, the molecular weight was about 950, 6.0 g) and isopropanol (5.0 g) were added into a three-neck flask and heated to 90 °C

under stirring. Air in the three-neck flask has been displaced with nitrogen in vacuum. After the temperature was constant, dimethyl azodiisobutyrate (0.60 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant B7 solution, which can be directly used in polymerization of a fluorine-containing polymer. The surfactant B7 was tested, Mn of surfactant B7 was 46800, PDI of surfactant B7 was 1.88, HLB value of surfactant B7 was 11.1, and a molar ratio of phenyl methacrylate to polyethylene glycol methyl ether methacrylate was 3.7.

Performances of surfactants B1 to B7 were shown in Table 3.

Table 3 Performances of surfactants B1 to B7

| | Hydrophobi c monomer | Hydrophilic monomer | *x*/*y* | HLB value | Degree of polymerization of polyethylene glycol segments (q value) | Particle size of micelle in water, nm | $R_h$ of the surfactant in isopropanol, nm | Mn | PDI |
|---|---|---|---|---|---|---|---|---|---|
| B1 | Methyl methacrylate | Polyethylene glycol methyl ether methacrylate, 950 | 6.3 | 11.1 | 20 | 11.6 | 16.3 | 64200 | 1.89 |
| B2 | *Tert*-butyl methacrylate | Polyethylene glycol methyl ether methacrylate, 950 | 4.5 | 11.1 | 20 | 13.3 | 13.8 | 53500 | 1.93 |
| B3 | *Tert*-butyl methacrylate | Polyethylene glycol methyl ether methacrylate, 950 | 4.5 | 11.1 | 20 | 13.3 | 13.8 | 43300 | 1.86 |
| B4 | *Tert*-butyl methacrylate | Polyethylene glycol methyl ether methacrylate, 950 | 4.5 | 11.1 | 20 | 13.3 | 13.8 | 46300 | 1.95 |
| B5 | Methyl methacrylate | Polyethylene glycol methyl ether methacrylate, 475 | 4.7 | 8.5 | 9 | 15.8 | 12.6 | 48300 | 1.79 |
| B6 | *Tert*-butyl methacrylate | Polyethylene glycol methyl ether methacrylate, 475 | 2.2 | 10.2 | 9 | 11.9 | 13.5 | 50400 | 1.75 |
| B7 | Phenyl methacrylate | Polyethylene glycol methyl ether methacrylate, 950 | 3.7 | 11.1 | 20 | 14.2 | 12.3 | 46800 | 1.88 |

It can be concluded from Table 3 that hydrophobic monomer R3 group of the surfactant was phenyl group, methyl group, *tert*-butyl group, degree of polymerization of polyethylene glycol on the hydrophilic monomer R6 group of the surfactant was 9 or 20. Mn of the surfactant was in a range of 43300 to 64200. Particle size of the micelle in water was in a range of 11.6 nm to 15.8 nm, which was similar to the hydrodynamic radius of the surfactant in isopropanol. It can be concluded that the surfactants can generate single molecule micelle structure in water, the surface activity of the surfactant was good, and the surfactant can used as emulsifiers in preparing polymer emulsion wight different particle sizes.

**Embodiment II-1, preparing a fluorine-containing polymer PVDF with the surfactant B1**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B1 solution (150 g, the content of the surfactant was 0.1 wt%, the content of isopropanol was 0.05 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure

in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still(80 $\pm$ 0.5 °C), and vinylidene fluoride was added into the polymerization kettle to keep the pressure (4.25 $\pm$ 0.25 MPa) in the kettle, until the vinylidene fluoride achieved the feeding target (600 g). Then the stirring stopped and a relief valve was opened, and an emulsion (2076 g, the content of the solid component was 20.0 wt%) was collected when the pressure lowered to an ordinary pressure. A total amount of the demulsifying substance was 0.16 wt% of the mass of the polymer. An average particle size of the generated polyvinylidene difluoride was tested under SEM, and the average particle size of the polyvinylidene difluoride was 125 nm. A viscosity of a 7wt% NMP solution of the generated polyvinylidene difluoride was 1280 cp (the shearing rate was 2.325 $s^{-1}$).

**Embodiment II-2, preparing a fluorine-containing polymer fluorine-containing polymer PVDF-HFP with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, hexafluoropropylene (80 g) was added into the polymerization kettle with a high-pressure gas cylinder, and a diluted surfactant B2 solution (150 g, the content of the surfactant was 0.1 wt%, the content of isopropanol was 0.3 wt%) was added into the polymerization kettle by a piston pump. The resultant was stirred at 700 rpm and heated to 100 °C. After the temperature was constant for 5 minutes, vinylidene fluoride (196 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (100 $\pm$ 0.5 °C), the ammonium persulfate solution (1 wt%) was continuously added into the polymerization kettle to keep a consumption amount of the monomer greater than 3 g/min, and vinylidene fluoride was added to the polymerization kettle to keep the pressure (4.25 $\pm$ 0.25 MPa), until the vinylidene fluoride achieved the feeding target (620 g). Then the stirring stopped and a relief valve was opened, and an emulsion (2290 g, the content of the solid component was 24.7 wt%) was collected when the pressure lowered to an ordinary pressure. A total amount of the demulsifying substance was 0.02 wt% of the mass of the polymer. An average particle size of the generated PVDF-HFP was tested under SEM, and the average particle size of the PVDF-HFP was 134 nm.

**Embodiment II-3, preparing fluorine-containing polymer PVF with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinyl fluoride (80 g) was added into the polymerization kettle with a high-pressure gas cylinder, and a diluted surfactant B2 solution (150 g, the content of the surfactant was 0.1 wt%, the content of isopropanol was 0.3 wt%) was added into the polymerization kettle by a piston pump. The resultant was stirred at 700 rpm and heated to 80 °C. After the temperature was constant for 5 minutes, vinyl fluoride (38 g) was added into the kettle with a high-pressure gas cylinder until pressure in the kettle was 2.75 MPa. A V-50 solution (50 g, 1 wt%) was added into the polymerization kettle with a piston pump to initiate the polymerization. During the polymerizing process, the temperature in the polymerization kettle was kept still (80 $\pm$ 0.5 °C), and the V-50 solution (1 wt%) was continuously added into the polymerization kettle to keep a consumption amount of the monomer greater than 3 g/min, and vinyl fluoride was added to the polymerization kettle to keep the pressure (2.75 $\pm$ 0.25 MPa), until the vinylidene fluoride achieved the feeding target (500 g). Then the stirring stopped and a relief valve was opened, and an emulsion (1890 g, the content of the solid component was 19.5 wt%) was collected when the pressure lowered to an ordinary pressure. A total amount of the demulsifying substance was 0.05 wt% of the mass of the polymer. An average particle size of the generated PVF was tested under SEM, and the average particle size of the PVF was 168 nm.

**Embodiment II-4, preparing fluorine-containing polymer PCTFE with surfactant B2**

Pure water (1500 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, chlorotrifluoroethylene (604 g) was added into the polymerization kettle with a high-pressure gas cylinder, and a diluted surfactant B2 solution (150 g, the content of the surfactant was 0.1 wt%, the content of isopropanol was 0.3 wt%) was added into the polymerization kettle by a piston pump, and pure water (350 g) was added into the polymerization kettle. The resultant was stirred at 700 rpm and heated to 80 °C. After the temperature was constant

for 5 minutes, an ammonium persulfate solution (50 g, 2 wt%) was added into the polymerization kettle with a piston pump to initiate the polymerization. During the polymerizing process, the temperature and the pressure in the polymerization kettle were kept still (80 ± 0.5 °C, 2.33 MPa.). The reaction lasted for 3 h. Then the stirring stopped and a relief valve was opened, and an emulsion (2113 g, the content of the solid component was 8.1 wt%) was collected when the pressure lowered to an ordinary pressure. A total amount of the demulsifying substance was 0.01 wt% of the mass of the polymer. An average particle size of the generated PCTFE was tested under SEM, and the average particle size of the PCTFE was 98 nm.

**Embodiment II-5, preparing fluorine-containing polymer PTFE with surfactant B2**

Pure water (1800 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, a diluted surfactant B2 solution (150 g, the content of the surfactant was 0.1 wt%, the content of isopropanol was 0.3 wt%) was added into the polymerization kettle by a piston pump, and tetrafluoroethylene was added into the polymerization kettle until the pressure was 1.75 MPa. The resultant was stirred at 700 rpm and heated to 80 °C. After the temperature was constant for 5 minutes, an ammonium persulfate solution (50 g, 1 wt%) was added into the polymerization kettle with a piston pump to initiate the polymerization. During the polymerizing process, the temperature in the polymerization kettle was kept still (80 ± 0.5 °C), and tetrafluoroethylene was continuously added in the polymerization kettle to maintain the pressure (1.75 MPa) in the polymerization kettle. The reaction lasted for 2 h. Then the stirring stopped and a relief valve was opened, and an emulsion (2213 g, the content of the solid component was 12.8 wt%) was collected when the pressure lowered to an ordinary pressure. A total amount of the demulsifying substance was calculated, and the amount of the demulsifying substance was 0.09 wt% of the mass of the polymer. An average particle size of the generated TFE was tested under SEM, and the average particle size of the TFE was 179 nm.

**Embodiment II-6, preparing fluorine-containing polymer PVDF with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B2 solution (150 g, the content of the surfactant was 0.1 wt%, the content of isopropanol was 0.05 wt%) was added into the polymerization kettle by a piston pump. The resultant was stirred at 700 rpm and heated to 80 °C. After the temperature was constant for 5 minutes, vinylidene fluoride (96 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), , and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (1970 g, the content of the solid component was 21.33 wt%) was collected when the pressure lowered to an ordinary pressure. A total amount of the demulsifying substance was calculated, and the amount of the demulsifying substance was 0.02 wt% of the mass of the polymer. An average particle size of the generated polyvinylidene difluoride was tested under SEM, and the average particle size of the polyvinylidene difluoride was 116 nm. A viscosity of a 7wt% NMP solution of the generated polyvinylidene difluoride was 3680 cp (the shearing rate was 2.325 $s^{-1}$).

**Embodiment II-7, preparing fluorine-containing polymer PVDF with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B2 solution (150 g, the content of the surfactant was 0.03 wt%, the content of isopropanol was 0.015 wt%) was added into the polymerization kettle by a piston pump. The resultant was stirred at 700 rpm and heated to 80 °C. After the temperature was constant for 5 minutes, vinylidene fluoride (98 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring

stopped and a relief valve was opened, and an emulsion (2010 g, the content of the solid component was 20.6 wt%) was collected when the pressure lowered to an ordinary pressure. A total amount of the demulsifying substance was calculated, and the amount of the demulsifying substance was 1.1 wt% of the mass of the polymer. An average particle size of the generated polyvinylidene difluoride was tested under SEM, and the average particle size of the polyvinylidene difluoride was 194 nm. A viscosity of a 7wt% NMP solution of the generated polyvinylidene difluoride was 16220 cp (the shearing rate was 2.325 $s^{-1}$).

**Embodiment II-8, preparing fluorine-containing polymer PVDF with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B2 solution (150 g, content of surfactant B2 was 1.3 wt%, content of isopropanol was 1.3 wt%) was added into the polymerization kettle by a piston pump. The resultant was stirred at 700 rpm and heated to 80 °C. After the temperature was constant for 5 minutes, vinylidene fluoride ((100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 $\pm$ 0.5 °C), and vinylidene fluoride was added in the polymerization kettle to maintain the pressure (4.25 $\pm$ 0.25 MPa) in the polymerization kettle, until the vinylidene fluoride achieved the feeding target (500 g). Then the stirring stopped and a relief valve was opened, and an emulsion (2015 g, the content of the solid component was 16.13 wt%) was collected when the pressure lowered to an ordinary pressure. A total amount of the demulsifying substance was calculated, and the amount of the demulsifying substance was 1.6 wt% of the mass of the polymer. An average particle size of the generated polyvinylidene difluoride PVDF was tested under SEM, and the average particle size of the polyvinylidene difluoride PVDF was 98 nm.

**Embodiment II-9, preparing fluorine-containing polymer PVDF-HFP-AA with surfactant B2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, hexafluoropropylene (50 g) was added into the polymerization kettle with a high-pressure gas cylinder, and a diluted surfactant B2 solution (150 g, the content of the surfactant was 0.1 wt%, the content of isopropanol was 0.05 wt%) was added into the polymerization kettle by a piston pump. The resultant was stirred at 700 rpm and heated to 80 °C. After the temperature was constant for 5 minutes, vinylidene fluoride (238 g) was added into the kettle with a high-pressure gas cylinder until pressure in the kettle was 4.50 MPa. After the temperature was constant for 5 minutes, vinylidene fluoride (84 g) was added into the kettle with a high-pressure gas cylinder until pressure in the kettle was 4.50 MPa, and an ammonium persulfate solution (40 g, 1 wt%) was added into the polymerization kettle with a piston pump to initiate the polymerization. During the polymerizing process, the temperature in the polymerization kettle was kept still (80 $\pm$ 0.5 °C), an ammonium persulfate solution (1 ml/min, 0.2 wt%) and a sodium acrylate solution (1 ml/min, 0.5 wt%) were added in by a constant-flow pump, and vinylidene fluoride was added into the polymerization kettle to keep the pressure (4.25 $\pm$ 0.25 MPa) in the kettle, until the vinylidene fluoride achieved the feeding target (628 g). Then the stirring stopped and a relief valve was opened, and an emulsion (2144 g, the content of the solid component was 23.3 wt%) was collected when the pressure lowered to an ordinary pressure. A total amount of the demulsifying substance was calculated, and the amount of the demulsifying substance was 0.02 wt% of the mass of the polymer. An average particle size of the generated polyvinylidene difluoride was tested under SEM, and the average particle size of the polyvinylidene difluoride was 78 nm. A viscosity of a 7wt% NMP solution of the generated polyvinylidene difluoride was 2310 cp (the shearing rate was 2.325 $s^{-1}$).

**Embodiment II-10, preparing fluorine-containing polymer PVDF with surfactant B3**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride monomers (180 g) was added into the polymerization kettle with a high-pressure gas cylinder, and a diluted surfactant B3 solution (150 g, the content of the surfactant was 0.1 wt%, the content of tertiary butanol was 0.05 wt%) was added into the polymerization kettle by a piston pump. The resultant was stirred at 700 rpm and heated to 80 °C. After the temperature was constant for 5 minutes, vinylidene fluoride monomers (80 g) was added into the kettle with a high-pressure gas cylinder until pressure in the kettle was 4.50 MPa. An ammonium persulfate solution

(50 g, 1 wt%) was added into the polymerization kettle with a piston pump to initiate the polymerization. During the polymerizing process, the temperature in the polymerization kettle was kept still (80 ± 0.5 °C), and vinylidene fluoride monomers were continuously added in the polymerization kettle to keep the pressure in the polymerization kettle (4.25 ± 0.25 MPa), until the amount of the vinylidene fluoride monomers achieved the feeding target (600 g). Then the stirring stopped and a relief valve was opened, and an emulsion (2084 g, the content of the solid component was 21.9 wt%) was collected when the pressure lowered to an ordinary pressure. A total amount of the demulsifying substance was calculated, and the amount of the demulsifying substance was 0.06 wt% of the mass of the polymer. An average particle size of the generated polyvinylidene difluoride was tested under SEM, and the average particle size of the polyvinylidene difluoride was 160 nm. A viscosity of a 7wt% NMP solution of the generated polyvinylidene difluoride was 3648 cp (the shearing rate was 2.325 $s^{-1}$).

**Embodiment II-11, preparing fluorine-containing polymer PVDF with surfactant**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B4 solution (150 g, the content of the surfactant was 0.1 wt%, the content of the ethyl acetate was 0.05 wt%) was added into the polymerization kettle by a piston pump. The resultant was stirred at 700 rpm and heated to 80 °C. After the temperature was constant for 5 minutes, vinylidene fluoride (86 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added into the polymerization kettle to keep the pressure (4.25 ± 0.25 MPa) in the kettle, until the amount of the vinylidene fluoride achieved the feeding target (600 g). Then the stirring stopped and a relief valve was opened, and an emulsion (2040 g, the content of the solid component was 23.3 wt%) was collected when the pressure lowered to an ordinary pressure. A total amount of the demulsifying substance was calculated, and the amount of the demulsifying substance was 0.18 wt% of the mass of the polymer. An average particle size of the generated polyvinylidene difluoride was tested under SEM, and the average particle size of the polyvinylidene difluoride was 154 nm. A viscosity of a 7wt% NMP solution of the generated polyvinylidene difluoride was 2408 cp (the shearing rate was 2.325 $s^{-1}$).

**Embodiment II-12, preparing fluorine-containing polymer PVDF with surfactant B5**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B5 solution (150 g, the content of the surfactant was 0.1 wt%, the content of isopropanol was 0.1 wt%) was added into the polymerization kettle by a piston pump. The resultant was stirred at 700 rpm and heated to 80 °C. After the temperature was constant for 5 minutes, vinylidene fluoride (90 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride monomers were added into the polymerization kettle to keep the pressure (4.25 ± 0.25 MPa) in the kettle, until the amount of vinylidene fluoride achieved the feeding target (600 g). Then the stirring stopped and a relief valve was opened, and an emulsion (1986 g, the content of the solid component was 22.9 wt%) was collected when the pressure lowered to an ordinary pressure. A total amount of the demulsifying substance was calculated, and the amount of the demulsifying substance was 0.13 wt% of the mass of the polymer. An average particle size of the generated polyvinylidene difluoride was tested under SEM, and the average particle size of the polyvinylidene difluoride was 202 nm. A viscosity of a 7wt% NMP solution of the generated polyvinylidene difluoride was 1152 cp (the shearing rate was 2.325 $s^{-1}$).

**Embodiment II-13, preparing fluorine-containing polymer PVDF with surfactant B6**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B6 solution (150 g, the content of the surfactant was 0.1 wt%, the content of isopropanol was 0.1 wt%) was added into the

polymerization kettle by a piston pump. The resultant was stirred at 700 rpm and heated to 80 °C. After the temperature was constant for 5 minutes, vinylidene fluoride (84 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride monomers were added into the polymerization kettle to keep the pressure (4.25 ± 0.25 MPa) in the kettle, until the amount of vinylidene fluoride monomers achieved the feeding target (600 g). Then the stirring stopped and a relief valve was opened, and an emulsion (1986 g, the content of the solid component was 24.1 wt%) was collected when the pressure lowered to an ordinary pressure. A total amount of the demulsifying substance was calculated, and the amount of the demulsifying substance was 0.17 wt% of the mass of the polymer. An average particle size of the generated polyvinylidene difluoride was tested under SEM, and the average particle size of the polyvinylidene difluoride was 194 nm. A viscosity of a 7wt% NMP solution of the generated polyvinylidene difluoride was 1568 cp (the shearing rate was 2.325 $s^{-1}$).

**Embodiment II-14, preparing fluorine-containing polymer PVDF with surfactant B7**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant B7 solution (150 g, the content of the surfactant was 0.1 wt%, the content of isopropanol was the content of isopropanol was 0.05 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still. (80 ± 0.5 °C), and vinylidene fluoride was added in the polymerization kettle to maintain the pressure (4.25 ± 0.25 MPa) in the polymerization kettle, until the amount of the vinylidene fluoride achieved the feeding target (600 g). Then the stirring stopped and a relief valve was opened, and an emulsion (2036 g, the content of the solid component was 21.1 wt%) was collected when the pressure lowered to an ordinary pressure. total amount of the demulsifying substance was calculated, and the amount of the demulsifying substance was 0.53 wt% of the mass of the polymer. An average particle size of the generated polyvinylidene difluoride was tested under SEM, and the average particle size of the polyvinylidene difluoride was 183 nm. A viscosity of a 7wt% NMP solution of the generated polyvinylidene difluoride was 1843 cp (the shearing rate was 2.325 $s^{-1}$).

**Comparative embodiment II-1**

**Preparing PVDF with PFOA type surfactant**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted PFOA solution (150 g, the content of the surfactant was 0.9 wt%, the content of the ethyl acetate was 0.05 wt%) was added into the polymerization kettle by a piston pump. The resultant was stirred at 700 rpm and heated to 80 °C. After the temperature was constant for 5 minutes, vinylidene fluoride (74 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added into the polymerization kettle to keep the pressure (4.25 ± 0.25 MPa) in the kettle, until the vinylidene fluoride achieved the feeding target (600 g). Then the stirring stopped and a relief valve was opened, and an emulsion (2022 g, the content of the solid component was 22.4 wt%) was collected when the pressure lowered to an ordinary pressure. A total amount of the demulsifying substance was calculated, and the amount of the demulsifying substance was 0.10 wt% of the mass of the polymer. An average particle size of the generated polyvinylidene difluoride was tested under SEM, and the average particle size of the polyvinylidene difluoride was 132 nm. A viscosity of a 7wt% NMP solution of the generated polyvinylidene difluoride was 2896 cp (the shearing rate was 2.325 $s^{-1}$).

**Comparative embodiment II-2**

**Preparing PVDF with multi-block copolymer**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted PLURONIC 31R1 solution (150 g, the content of the surfactant was 0.6 wt%, the content of the ethyl acetate was 0.05 wt%) was added into the polymerization kettle by a piston pump. The resultant was stirred at 700 rpm and heated to 80 °C. After the temperature was constant for 5 minutes, vinylidene fluoride (82 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 $\pm$ 0.5 °C), and vinylidene fluoride was added into the polymerization kettle to keep the pressure (4.25 $\pm$ 0.25 MPa) in the kettle, until the amount of vinylidene fluoride achieved the feeding target (600 g). Then the stirring stopped and a relief valve was opened, and an emulsion (2002 g, the content of the solid component was 23.2 wt%) was collected when the pressure lowered to an ordinary pressure. A total amount of the demulsifying substance was calculated, and the amount of the demulsifying substance was 1.2 wt% of the mass of the polymer. An average particle size of the generated polyvinylidene difluoride was tested under SEM, and the average particle size of the polyvinylidene difluoride was 198 nm. A viscosity of a 7wt% NMP solution of the generated polyvinylidene difluoride was 1152 cp (the shearing rate was 2.325 $s^{-1}$).

The fluorine-containing polymers prepared in the embodiments and the comparative embodiments were tested, and the data was shown in Table 4.

Table 4 Performances of the fluorine-containing polymers in embodiments and comparative embodiments

| | Polymer | Surfactant | | | Particle size of emulsion, nm | Content of solid substance in the emulsion, wt% | Amount of demulsifying substance, wt% | Induction period (min) |
|---|---|---|---|---|---|---|---|---|
| | | Kind | Amount, g | Amount of the surfactant to the generated polymer, wt% | | | | |
| Embodiment II-1 | PVDF | B1 | 0.15 | 0.036 | 125 | 20 | 0.16 | 15 |
| Embodiment II-2 | PVDF-HF P | B2 | 0.15 | 0.026 | 134 | 24.7 | 0.02 | 10 |
| Embodiment II-3 | PVF | B2 | 0.15 | 0.041 | 168 | 19.5 | 0.05 | 15 |
| Embodiment II-4 | PCTFE | B2 | 0.15 | 0.087 | 98 | 8.1 | 0.01 | - |
| Embodiment II-5 | PTFE | B2 | 0.15 | 0.053 | 179 | 12.8 | 0.09 | 15 |
| Embodiment II-6 | PVDF | B2 | 0.15 | 0.036 | 116 | 21.33 | 0.02 | 15 |
| Embodiment II-7 | PVDF | B2 | 0.045 | 0.010 | 194 | 20.6 | 1.1 | 10 |
| Embodiment II-8 | PVDF | B2 | 1.95 | 0.599 | 98 | 16.13 | 1.6 | 50 |
| Embodiment II-9 | PVDF-HF P-AA | B2 | 0.15 | 0.030 | 78 | 23.3 | 0.02 | 30 |
| Embodiment II-10 | PVDF | B3 | 0.15 | 0.032 | 160 | 21.9 | 0.06 | 15 |
| Embodiment II-11 | PVDF | B4 | 0.15 | 0.031 | 154 | 23.3 | 0.18 | 15 |

(continued)

| | Polymer | Surfactant | | | Particle size of emulsion, nm | Content of solid substance in the emulsion, wt% | Amount of demulsifying substance, wt% | Induction period (min) |
|---|---|---|---|---|---|---|---|---|
| | | Kind | Amount, g | Amount of the surfactant to the generated polymer, wt% | | | | |
| Embodiment II-12 | PVDF | B5 | 0.15 | 0.032 | 202 | 22.9 | 0.13 | 10 |
| Embodiment II-13 | PVDF | B6 | 0.15 | 0.031 | 194 | 24.1 | 0.17 | 10 |
| Embodiment II-14 | PVDF | B7 | 0.15 | 0.034 | 183 | 21.1 | 0.53 | 10 |
| Comparative Embodiment II-1 | PVDF | PFOA | 1.35 | 0.298 | 132 | 22.4 | 0.1 | 5 |
| Comparative Embodiment II-2 | PVDF | PLURONIC 31R1 | 0.6 | 0.193 | 198 | 23.2 | 1.2 | 30 |

It can be concluded from table 4 that when the amount of the surfactant was in a range of 0.01 wt% to 0.1 wt% of the amount of generated fluorine-containing polymer, the particle size of the emulsion of the generated fluorine-containing polymer emulsion was in a range of 78 nm to 202 nm, the amount of the solid component in the emulsion is high, and the amount of the demulsifying substance is low. In embodiment II-8, the surfactant B2 was used to prepare PVDF, when the amount of the surfactant was 0.599 wt% (greater than 0.3 wt%) of the amount of generated fluorine-containing polymer, the particle size of the emulsion could be less than 100 nm, but the induction period of the polymerization reaction was long, and the polymerization rate was low. The surfactant of the present disclosure can be used in preparing fluorine-containing polymer emulsions with different particle sizes. Compare comparative embodiment II-1 to embodiment II-1, the particle size of the fluorine-containing polymer, the content of the solid component and the amount of demulsifying substance were similar, but the amount of PFOA used comparative embodiment II-1 was 8.3 times of which in embodiment II-1 (relative to the amount of the generated polymer). Compare comparative embodiment II-2 to embodiment II-1, the amount of PLURONIC 31R1 used in comparative embodiment II-2 was 5.4 times of which in embodiment II-1 (relative to the amount of the generated polymer), the amount of demulsifying substance was 7.5 times of which in embodiment II-1, and the induction period was 2 times of which in embodiment II-1.

**III, preparation of surfactant C1**

Methyl methacrylate and polyethylene glycol methyl ether methacrylate (the molecular weight was about 950, q value was 20) were used as monomers to prepare surfactant C1.

Methyl methacrylate (4.0 g), polyethylene glycol methyl ether methacrylate (the molecular weight was about 950, 6.0 g, q value was 20) and isopropanol (5.0 g) were added into a three-neck flask and heated to 80 °C under stirring. Air in the three-neck flask has been displaced with nitrogen in vacuum before adding the materials. After the temperature was constant, dimethyl azodiisobutyrate (0.60 g) was added, heated and stirred for15 h, until the monomer and the initiator were totally reacted (the conversion rate was greater than 99%). Pure water (85 g) was added in the resultant, and stirred until the resultant was totally dissolved. Then the resultant was kept and cooled to room temperature to obtain a solution containing the surfactant C1, which can be directly used in polymerization of the fluorine-containing monomers.

The surfactant C1 was tested, Mn of the surfactant C1 was 64200, PDI of the surfactant C1 was 1.89, HLB value of the surfactant C1 was 11.1, and a molar ratio of methyl methacrylate to polyethylene glycol methyl ether methacrylate was 6.3.

**Preparation of surfactant C2**

Methyl methacrylate and polyethylene glycol methyl ether methacrylate (the molecular weight was about 475, *q* value was 9) were used as monomers to prepare surfactant C2.
Methyl methacrylate (4.0 g), polyethylene glycol methyl ether methacrylate (the molecular weight was about 475, 6.0 g, *q* value was 9), and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h. Pure water (85 g) was added in the resultant, and stirred until the resultant was totally dissolved. Then the resultant was kept and cooled to room temperature to obtain a solution containing the surfactant C2, which can be directly used in polymerization of the fluorine-containing monomers.
The surfactant was tested, Mn of surfactant was 53400, PDI of surfactant was 1.83, HLB value of surfactant was 10.2, and a molar ratio of methyl methacrylate to polyethylene glycol methyl ether methacrylate was 3.2.

**Preparation of surfactant C3**

Methyl methacrylate and polyethylene glycol methyl ether methacrylate (the molecular weight was about 475, *q* value was 9) were used as monomers to prepare surfactant C3.
Methyl methacrylate (5.0 g), polyethylene glycol methyl ether methacrylate (the molecular weight was about 475, 5.0 g, *q* value was 9), and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h. Pure water (85 g) was added in the resultant, and stirred until the resultant was totally dissolved. Pure water (85 g) was added in the resultant, and stirred until the resultant was totally dissolved. Then the resultant was kept and cooled to room temperature to obtain a solution containing the surfactant C3, which can be directly used in polymerization of the fluorine-containing monomers.
The surfactant was tested, Mn of the surfactant was 48300, PDI of the surfactant was 1.79, HLB value oft he surfactant was 8.5, and a molar ratio of methyl methacrylate to polyethylene glycol methyl ether methacrylate was 4.7.
Performances of surfactants C1 to C3 were shown in Table 5.

Table 5 Performances of surfactants C1 to C3

| surfactant | *x*/*y* | HLB value | Degree of polymerization of the polyethylene glycol segment (*q* value) | Mn | Particle size of micelle in water, nm | $R_h$ of surfactant in isopropanol, nm |
|---|---|---|---|---|---|---|
| C1 | 6.3 | 11.1 | 20 | 64200 | 11.6 | 16.3 |
| C2 | 3.2 | 10.2 | 9 | 53400 | 13.6 | 14.8 |
| C3 | 4.7 | 8.5 | 9 | 48300 | 15.8 | 12.6 |

Preparation of fluorine-containing polymer

Embodiment III-1, preparing PVDF with surfactant C1

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant C1 solution (150 g, the content of C1 was 0.1 wt%, the content of isopropanol was the content of isopropanol was 0.05 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added into the polymerization kettle to keep the pressure (4.25 ± 0.25 MPa) in the kettle, until the amount of vinylidene fluoride achieved the feeding target (600 g). Then the stirring stopped and a relief valve was opened, and an emulsion (2076 g, the content of the solid component was 21.3 wt%) was collected when the pressure lowered to an ordinary pressure. A total amount of the demulsifying substance was calculated, and the amount of the demulsifying substance was 0.16 wt% of the mass of the polymer. An average particle size of the generated polyvinylidene difluoride PVDF was tested under SEM, and the average particle size of the polyvinylidene difluoride PVDF was 116 nm (the particle size was in a range of 109.4 nm to 125.2 nm). A viscosity of a

7wt% NMP solution of the generated polyvinylidene difluoride PVDF was 1280 cp (the shearing rate was 2.325 $s^{-1}$).

**Embodiment III-2, preparing PVDF with surfactant C2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant C2 solution (150 g, the content of C2 was 0.1 wt%, the content of isopropanol was 0.1 wt%) was added into the polymerization kettle by a piston pump. The resultant was stirred at 700 rpm and heated to 80 °C. After the temperature was constant for 5 minutes, vinylidene fluoride (82 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the amount of vinylidene fluoride achieved the feeding target (600 g). Then the stirring stopped and a relief valve was opened, and an emulsion (2032 g, the content of the solid component was 24.1 wt%) was collected when the pressure lowered to an ordinary pressure. A total amount of the demulsifying substance was calculated, and the amount of the demulsifying substance was 0.09 wt% of the mass of the polymer. An average particle size of the generated polyvinylidene difluoride PVDF was tested under SEM, and the average particle size of the polyvinylidene difluoride PVDF was 202 nm (the particle size was in a range of 194.6 nm to 210.6 nm). A viscosity of a 7wt% NMP solution of the generated polyvinylidene difluoride PVDF was 1568 cp (the shearing rate was 2.325 $s^{-1}$).

**Embodiment III-3, preparing PVDF with surfactant C1 and C2 (a mass ratio of surfactant C1 t surfactant to C2 is 2 : 1)**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, a diluted surfactant C2 solution (50 g, the content of C2 was 0.1 wt%, the content of isopropanol was 0.1 wt%) was added into the polymerization kettle by a piston pump, and a diluted surfactant C1 solution (100 g, the content of C1 was 0.1 wt%, the content of isopropanol was 0.1 wt%) was added into the polymerization kettle by a piston pump. The resultant was stirred at 700 rpm and heated to 80 °C. After the temperature was constant for 5 minutes, vinylidene fluoride (80 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added into the polymerization kettle to keep the pressure (4.25 ± 0.25 MPa) in the kettle, until the amount of vinylidene fluoride achieved the feeding target (600 g). Then the stirring stopped and a relief valve was opened, and an emulsion (2034 g, the content of the solid component was 21.8 wt%) was collected when the pressure lowered to an ordinary pressure. A total amount of the demulsifying substance was calculated, and the amount of the demulsifying substance was 0.06 wt% of the mass of the polymer. An average particle size of the generated polyvinylidene difluoride PVDF was tested under SEM, and the average particle size of the polyvinylidene difluoride PVDF was140 nm (the particle size was in a range of 134.2 nm to 145.9 nm). A viscosity of a 7wt% NMP solution of the generated polyvinylidene difluoride PVDF was 1384 cp (the shearing rate was 2.325 $s^{-1}$).

**Embodiment III-4, preparing PVDF with surfactant C1 and C2 (a mass ratio of surfactant C1 t surfactant to C2 is 1 : 2)**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, a diluted surfactant C2 solution (100 g, the content of C2 was0.1 wt%, the content of isopropanol was 0.1 wt%) was added into the polymerization kettle by a piston pump, and a diluted surfactant C1 solution (50 g, the content of C1 was 0.1 wt%, the content of isopropanol was 0.1 wt%) was added into the polymerization kettle by a piston pump. The resultant was stirred at 700 rpm and heated to 80 °C. After the temperature was constant for 5 minutes, vinylidene fluoride (76 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process,

the temperature in the polymerization kettle was kept still (80 ± 0.5 °C), and vinylidene fluoride was added into the polymerization kettle to keep the pressure (4.25 ± 0.25 MPa) in the kettle, until the amount of vinylidene fluoride achieved the feeding target (600 g). Then the stirring stopped and a relief valve was opened, and an emulsion (2072 g, the content of the solid component was 22.5 wt%) was collected when the pressure lowered to an ordinary pressure. A total amount of the demulsifying substance was calculated, and the amount of the demulsifying substance was 0.11 wt% of the mass of the polymer. An average particle size of the generated polyvinylidene difluoride PVDF was tested under SEM, and the average particle size of the polyvinylidene difluoride PVDF was 158 nm (the particle size was in a range of 154.3 nm to 165.7 nm). A viscosity of a 7wt% NMP solution of the generated polyvinylidene difluoride PVDF was 1456 cp (the shearing rate was 2.325 $s^{-1}$).

**Embodiment III-5, preparing PVDF with surfactant C3**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant C3 solution (150 g, the content of C3 was 0.1 wt%, the content of isopropanol was the content of isopropanol was 0.3 wt%) was added into the polymerization kettle by a piston pump. The resultant was stirred at 700 rpm and heated to 100 °C. After the temperature was constant for 5 minutes, vinylidene fluoride (86 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (100 ± 0.5 °C), the ammonium persulfate solution (1 wt%) was continuously added into the polymerization kettle to keep a consumption amount of the monomer greater than 3 g/min, and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2084 g, the content of the solid component was 23.0 wt%) was collected when the pressure lowered to an ordinary pressure. A total amount of the demulsifying substance was calculated, and the amount of the demulsifying substance was 1.1 wt% of the mass of the polymer. An average particle size of the generated polyvinylidene difluoride PVDF was tested under SEM, and the average particle size of the polyvinylidene difluoride PVDF was 239 nm (the particle size was in a range of 234.0 nm to 247.3 nm). A viscosity of a 7wt% NMP solution of the generated polyvinylidene difluoride PVDF was 1448 cp (the shearing rate was 2.325 $s^{-1}$).

Particle sizes of the fluorine-containing polymers prepared in embodiments III-1 to III-5 were tested, and particle sizes of the fluorine-containing polymers prepared in embodiments III-1 to III-5 were shown in Table 6.

Table 6 Particle sizes of the fluorine-containing polymers prepared in embodiments III-1 to III-5

| | Emulsifier | | | | | Temperature of polymerization, ° C | Pressure of polymerization, mpa | Particle size of the emulsion, nm | Content of solid substance in the emulsion, wt% | Amount of demulsifying substance, wt% |
|---|---|---|---|---|---|---|---|---|---|---|
| | Kind | Amount , g | HLB value | Average degree of polymerization of polyethylene glycol segments | Amount of the surfactant to the generated polymer, wt% | | | | | |
| Embodiment III-1 | C1 | 0.15 | 11.1 | 20 | 0.033 | 80 | 4.5 | 116 | 21.3 | 0.16 |
| Embodiment III-2 | C2 | 0.15 | 10.2 | 9 | 0.030 | 80 | 4.5 | 202 | 24.1 | 0.09 |
| Embodiment III-3 | C1:C2 =2:1 | 0.15 | 10.4 | 16.3 | 0.033 | 80 | 4.5 | 140 | 21.8 | 0.06 |
| Embodiment III-4 | C1:C2 =1:2 | 0.15 | 9.8 | 12.6 | 0.032 | 80 | 4.5 | 158 | 22.5 | 0.11 |
| Embodiment III-5 | C3 | 0.15 | 8.5 | 9 | 0.031 | 100 | 4.5 | 239 | 23.0 | 1.1 |

It can be concluded from table 6 that when other polymerization conditions were the same, the particle size of the of the emulsion could be adjusted by merely changing the average degree of polymerization of the polyethylene glycol segments in the surfactant. At the same time, the content of the solid substance in the fluorine-containing polymer was high, and the amount of demulsifying substance was low. It could be concluded from embodiment III-1 to embodiment III-4, when the average degree of polymerization of the polyethylene glycol segments in the surfactant decreased, the particle sizes of the fluorine-containing polymer emulsion gradually increased, and the particle size of the fluorine-containing polymer and an average chain length of the polyethylene glycol (i.e. an average degree of polymerization) satisfy the following equation: particle size = -7.5×average chain length of the polyethylene glycol + 262.7, and R2=0.9593.

**IV, preparation of surfactant D1**

Methyl methacrylate and polyethylene glycol methyl ether methacrylate (the molecular weight was about 950, *q* value was 20) were used as monomers to prepare surfactant D1.

Methyl methacrylate (4.0 g), polyethylene glycol methyl ether methacrylate (the molecular weight was about 950, *q* value was 20, 6.0 g), and isopropanol (5.0 g) were added into a three-neck flask and heated to 80 °C under stirring. Air in the three-neck flask has been displaced with nitrogen in vacuum. After the temperature was constant, dimethyl azodiisobutyrate (0.60 g) was added, heated and stirred for 15 h, until the monomer and the initiator were totally reacted (the conversion rate was greater than 99%). Pure water (85 g) was added in the resultant, and stirred until the resultant was totally dissolved. Then the resultant was kept and cooled to room temperature to obtain a solution containing the surfactant D1, which can be directly used in polymerization of the fluorine-containing monomers.

The surfactant was tested, Mn of the surfactant was 64200, PDI of the surfactant was 1.89, HLB value of the surfactant was 11.1, and the molar ratio (*x*/*y*) of methyl methacrylate to polyethylene glycol methyl ether methacrylate was 6.3.

**Preparation of surfactant D2**

Tert-butyl methacrylate and polyethylene glycol methyl ether methacrylate (the molecular weight was about 950, *q* value was 20) were used as monomers to prepare surfactant D2.

*Tert*-butyl methacrylate(4.0 g), polyethylene glycol methyl ether methacrylate (the molecular weight was about 950, 6.0 g), and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant D2 solution, which can be directly used in polymerization of a fluorine-containing polymer.

The surfactant D2 was tested, Mn of the surfactant D2 was 53500, PDI of the surfactant D2 was 1.93, HLB value of the surfactant D2 was 11.1, and the molar ratio of *tert*-butyl methacrylate to polyethylene glycol methyl ether methacrylate was 4.5.

**Preparation of surfactant D3**

Phenyl methacrylate, polyethylene glycol methyl ether methacrylate (the molecular weight was about 950, *q* value was 20) were used as monomers to prepare surfactant D3.

Phenyl methacrylate (4.0 g), polyethylene glycol methyl ether methacrylate (degree of polymerization 20, the molecular weight was about 950, 6.0 g), and isopropanol (5.0 g) were added into a three-neck flask and heated to 90 °C under stirring. Air in the three-neck flask has been displaced with nitrogen in vacuum. After the temperature was constant, dimethyl azodiisobutyrate (0.60 g) was added, heated and stirred for 8 h, until the monomer and the initiator were totally reacted (the conversion rate was greater than 99%). Pure water (85 g) was added in the resultant, and stirred until the resultant was totally dissolved. The resultant was kept and cooled to room temperature to obtain a surfactant D3 solution, which can be directly used in polymerization of a fluorine-containing polymer.

The surfactant D3 was tested, Mn of the surfactant D3 was 46800, PDI of the surfactant D3 was 1.88, HLB value of the surfactant D3 was 11.1, and the molar ratio of phenyl methacrylate to polyethylene glycol methyl ether methacrylate was 3.7.

Performances of surfactants D1 to D3 were shown in Table 7.

Table 7 Performances of surfactants D1 to D3

| Surfactant | *x*/*y* | HLB value | Degree of polymerization of polyethylene glycol segments (q value) | Mn | Particle size of micelle in water, nm | $R_h$ of the surfactant in isopropanol, nm |
|---|---|---|---|---|---|---|
| D1 | 6.3 | 11.1 | 20 | 64200 | 11.6 | 16.3 |
| D2 | 4.5 | 11.1 | 20 | 53500 | 13.3 | 13.8 |
| D3 | 3.7 | 11.1 | 20 | 46800 | 14.2 | 12.3 |

**Preparation of fluorine-containing polymer**

**Embodiment IV-1**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant D1 solution (150 g, the content of D1 was 0.1 wt%, the content of isopropanol was the content of isopropanol was 0.05 wt%, the content of sodium acrylate sodium polyacrylate (Mn = 2000 g/mol) was 0.3 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2204 g, the content of the solid component was 30.8 wt%) was collected when the pressure lowered to an ordinary pressure. An average particle size of the generated polyvinylidene difluoride PVDF was tested under SEM, and the average particle size of the polyvinylidene difluoride PVDF was82 nm. The molecular weight Mn of the generated polyvinylidene difluoride PVDF was 1054000, and PDI of the generated polyvinylidene difluoride PVDF was 2.36.

**Embodiment IV-2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant D1 solution (150 g, the content of D1 was 0.1 wt%, the content of isopropanol was the content of isopropanol was 0.05 wt%, the content of sodium acrylate was 0.15 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2158 g, the content of the solid component was 23.4 wt%) was collected when the pressure lowered to an ordinary pressure. An average particle size of the generated polyvinylidene difluoride PVDF was tested under SEM, and the average particle size of the polyvinylidene difluoride PVDF was 82 nm, the molecular weight Mn of the polyvinylidene difluoride PVDF was 1273000, and PDI of the polyvinylidene difluoride PVDF was 2.53.

**Embodiment IV-3**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant D2 solution (150 g, the content of D2 was 0.1 wt%, the content of isopropanol was the content of isopropanol was 0.05 wt%, the

content of sodium acrylate was 0.15 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2074 g, the content of the solid component was 22.5 wt%) was collected when the pressure lowered to an ordinary pressure. An average particle size of the generated polyvinylidene difluoride PVDF was tested under SEM, and the average particle size of the polyvinylidene difluoride PVDF was 88 nm, the molecular weight Mn of the polyvinylidene difluoride PVDF was 1084000, and PDI of the polyvinylidene difluoride PVDF was 2.61.

**Embodiment IV-4**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant D3 solution (150 g, the content of D3 was 0.1 wt%, the content of isopropanol was 0.05 wt%, the content of sodium acrylate was 0.15 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2112 g, the content of the solid component was 24.3 wt%) was collected when the pressure lowered to an ordinary pressure. An average particle size of the generated polyvinylidene difluoride PVDF was tested under SEM, and the average particle size of the polyvinylidene difluoride PVDF was 88 nm, the molecular weight Mn of the polyvinylidene difluoride PVDF was 1101000, and PDI of the polyvinylidene difluoride PVDF was 2.46.

**Comparative embodiment IV-1**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant D2 solution (150 g, the content of D2 was 1.3 wt%, the content of isopropanol was 1.3 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (500 g). Then the stirring stopped and a relief valve was opened, and an emulsion (2015 g, the content of the solid component was 16.13 wt%) was collected when the pressure lowered to an ordinary pressure. An average particle size of the generated polyvinylidene difluoride PVDF was tested under SEM, and the average particle size of the polyvinylidene difluoride PVDF was 98nm(92.10 nm to 99.09 nm), the molecular weight Mn of the polyvinylidene difluoride PVDF was 163000, and PDI of the polyvinylidene difluoride PVDF was 1.91.

**Comparative embodiment IV-2**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a diluted surfactant solution (150 g, the content of D2 was 0.1 wt%, the content of isopropanol was 0.1 wt%) was added into the polymerization kettle by a piston pump. The resultant was stirred at 700 rpm and heated to 80 °C. After the temperature was constant for 5

minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2076 g, the content of the solid component was 20.0 wt%) was collected when the pressure lowered to an ordinary pressure. An average particle size of the generated polyvinylidene difluoride PVDF was tested under SEM, and the average particle size of the polyvinylidene difluoride PVDF was 156 nm (126.4 nm to 176.8 nm), the molecular weight Mn of the polyvinylidene difluoride PVDF was 1088000, and PDI of the polyvinylidene difluoride PVDF was 2.55.

**Comparative embodiment IV-3**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a surfactant solution (150 g, the content of PLURONIC 31R1 was 1.8 wt%, the content of sodium acrylate sodium polyacrylate (Mn = 2000 g/mol) was 0.64 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 1 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2034 g, the content of the solid component was 24.34 wt%) was collected when the pressure lowered to an ordinary pressure. An average particle size of the generated polyvinylidene difluoride PVDF was tested under SEM, and the average particle size of the polyvinylidene difluoride PVDF was128 nm (126.4 nm to 176.8 nm), the molecular weight Mn of the polyvinylidene difluoride PVDF was 663000, and PDI of the polyvinylidene difluoride PVDF was 2.34.

**Comparative embodiment IV-4**

Pure water (1400 g) was added in a 3.4 L polymerization kettle. After the kettle was closed, the polymerization kettle was vacuumized with an oil-sealed vacuum pump for five minutes, and then nitrogen was filled in the polymerization kettle to adjust the pressure in the polymerization kettle to 0.15 MPa. Such operation was repeated three times. After the last vacuumizing process, vinylidene fluoride (180 g) was added into the polymerization kettle, and a surfactant solution (150 g, the content of PLURONIC 31R1 was 1.8 wt%, the content of sodium acrylate was 0.64 wt%) was added into the polymerization kettle by a piston pump. The resultant was stirred at 700 rpm and heated to 80 °C. After the temperature was constant for 5 minutes, vinylidene fluoride (100 g) was added into the kettle with a high-pressure gas cylinder until pressure in the kettle was 4.50 MPa. An ammonium persulfate solution (50 g, 2 wt%) was added into the polymerization kettle with a piston pump to initiate the polymerization. During the polymerizing process, the temperature in the polymerization kettle was kept still (80 ± 0.5 °C), and vinylidene fluoride was added in the polymerization kettle to maintain the pressure (4.25 ± 0.25 MPa) in the polymerization kettle, until the vinylidene fluoride achieved the feeding target (600 g). Then the stirring stopped and a relief valve was opened, and an emulsion (2018 g, the content of the solid component was 23.35 wt%) was collected when the pressure lowered to an ordinary pressure. An average particle size of the generated polyvinylidene difluoride PVDF was tested under SEM, and the average particle size of the polyvinylidene difluoride PVDF was 143 nm, the molecular weight Mn of the polyvinylidene difluoride PVDF was 485000, and PDI of the polyvinylidene difluoride PVDF was 2.26.

The fluorine-containing polymer emulsion prepared in the embodiments and comparative embodiments were tested, and data of the fluorine-containing polymer emulsion prepared in the embodiments and comparative embodiments were shown in Table 8.

Table 8 Data of the fluorine-containing polymer emulsion prepared in embodiments and comparative embodiments

| | Polymer | Surfactant | | Ionic compounds | | Fluorine-containing polymer | | | |
|---|---|---|---|---|---|---|---|---|---|
| | | Kind | Amount of the surfactant to the generated polymer, wt% | Kind | Amount of the ionic compounds to the generated polymer, wt% | Particle size of the emulsion, nm | Content of solid substance in the emulsion, wt% | Mn | PDI |
| Embodiment IV-1 | PVDF | D1 | 0.022 | sodium polyacrylate | 0.066 | 82 | 30.8 | 1054000 | 2.36 |
| Embodiment IV-2 | PVDF | D1 | 0.029 | sodium acrylate | 0.044 | 80 | 23.4 | 1273000 | 2.53 |
| Embodiment IV-3 | PVDF | D2 | 0.032 | sodium acrylate | 0.048 | 88 | 22.5 | 1084000 | 2.61 |
| Embodiment IV-4 | PVDF | D3 | 0.034 | sodium acrylate | 0.043 | 95 | 24.3 | 1101000 | 2.46 |
| Comparative Embodiment IV-1 | PVDF | D2 | 0.6 | -- | -- | 98 | 16.13 | 163000 | 1.91 |
| Comparative Embodiment IV-2 | PVDF | D2 | 0.036 | -- | -- | 156 | 20.0 | 1088000 | 2.55 |
| Comparative Embodiment IV-3 | PVDF | PLURONIC 31R1 | 0.54 | sodium polyacrylate | 0.19 | 128 | 24.34 | 663000 | 2.34 |
| Comparative Embodiment IV-4 | PVDF | PLURONIC 31R1 | 0.57 | sodium acrylate | 0.20 | 143 | 23.35 | 485000 | 2.26 |

It can be concluded from Table 8 that ionic compounds were not added in the comparative embodiment IV-1. Although the particle size of the generated emulsion was in a range of 70 nm to 100 nm, the amount of the surfactant used in the reaction was great (which was 0.6 wt of the generated polymer), and the polymerization rate was slow. Compared to embodiment IV-3, the polymerization time increased, and the upper limit of the polymer molecule is limited. Compare comparative embodiment IV-2 to embodiment IV-3, when the amount of the surfactant used in the polymerization was the same, but ionic compounds were not added in the reaction, the particle size of the fluorine-containing polymer emulsion cannot be controlled in the range of 70 nm to 100 nm. In comparative embodiment IV-3 and comparative embodiment IV-4, the surfactant PLURONIC 31R1 was used. When the ionic compounds were added in the reaction, the particle size of the fluorine-containing polymer was greater than 100 nm although a great amount of ionic compounds was added in the reaction.

The foregoing is only embodiments of the present application, and is not intended to limit the present application, which may be subject to various changes and variations for those skilled in the art. Any modifications, equivalent substitutions, improvements, etc. made within the spirit and principles of this application shall be included in the scope of protection of this application.

## Claims

1. A surfactant, wherein the surfactant is a copolymer, **characterized in that** a comonomer for preparing the surfactant comprises at least one of hydrophobic monomers as shown in formula (1) and at least one of hydrophilic monomers as shown in formula (2),

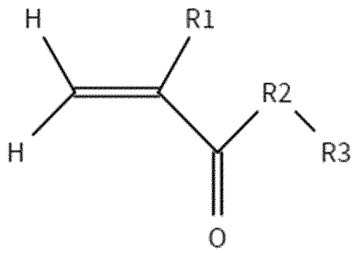

formula (1),

wherein R1 is selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups;
R2 is selected from O, S, imino group, $C_1$-$C_{18}$ linear alkylimino groups or branched alkylimino groups or cyclo-alkylimino groups, or $C_1$-$C_{18}$ arylimino groups;
R3 is selected from phenyl group, $C_1$-$C_4$ linear alkyl groups or branched alkyl groups, $C_5$-$C_{18}$ linear alkyl groups or branched alkyl groups, benzyl groups, 2-phenyl-2-propyl group or allyl group, and

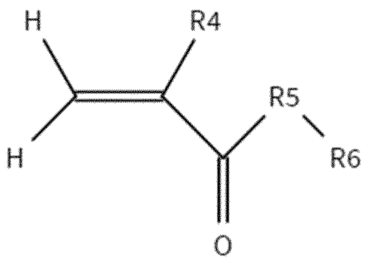

formula (2),

wherein R4 is selected from H, $C_1$-$C_{18}$ linear alkyl groups or branched alkyl groups, $C_1$-$C_{18}$ linear alkyl ether groups or branched alkyl ether groups, $C_1$-$C_{18}$ linear haloalkyl groups or branched haloalkyl groups, $C_2$-$C_{18}$ aliphatic hydroxyl groups, $C_2$-$C_{18}$ aliphatic thioether groups, $C_2$-$C_{18}$ aliphatic ester groups, or $C_2$-$C_{18}$ aliphatic cyano groups;
R5 is selected from O, S, imino group, $C_1$-$C_{18}$ linear alkylimino groups or branched alkylimino groups or cyclo-alkylimino groups, or $C_1$-$C_{18}$ arylimino groups; and
R6 is selected from polyethylene glycol derivates $(CH_2CH_2O)_qZ$, wherein *q* is an integer greater than 4 and less

than and equal to 100, and Z is selected from H, or $C_1$-$C_3$ linear alkyl groups or branched alkyl groups.

**2.** The surfactant of claim 1, wherein

R1 and R4 are each independently selected from H, $C_1$-$C_5$ linear alkyl groups or branched alkyl groups, or $C_1$-$C_5$ linear alkyl ether groups or branched alkyl ether groups;
R2 and R5 are each independently selected from O, imino group, $C_1$-$C_9$ linear alkylimino groups or branched alkylimino groups or cyclo-alkylimino groups, or $C_1$-$C_9$ arylimino groups;
R3 is selected from phenyl group, or $C_1$-$C_4$ linear alkyl groups or branched alkyl groups; and
R6 is selected from polyethylene glycol derivates $(CH_2CH_2O)_qZ$, wherein *q* is an integer greater than 9 and less than and equal to 100, and Z is selected from H, or $C_1$-$C_3$ linear alkyl groups or branched alkyl groups.

**3.** The surfactant of claim 2, wherein

R1 and R4 are each independently selected from H or methyl group,
R2 and R5 are each independently selected from O or imino group;
R3 is selected from phenyl group, $C_1$-$C_4$ linear alkyl groups or single-branched alkyl groups; and
R6 is selected from polyethylene glycol derivates $(CH_2CH_2O)_qZ$, wherein *q* is an integer greater than 9 and less than and equal to 100, and Z is selected from H, or $C_1$-$C_3$ linear alkyl groups or branched alkyl groups.

**4.** The surfactant of claim 3, wherein

R1 and R4 are each independently selected from methyl group,
R2 and R5 are each independently selected from O;
R3 is selected from phenyl group, methyl group, or *tert*-butyl group; and
R6 is selected from polyethylene glycol derivates $(CH_2CH_2O)_qZ$, wherein *q* is an integer greater than 9 and less than and equal to 50, and Z is selected from H, or $C_1$-$C_3$ linear alkyl groups or branched alkyl groups.

**5.** The surfactant of claim 1, wherein the hydrophobic monomers are at least one of methyl methacrylate, ethyl methacrylate, propyl methacrylate, isopropyl methacrylate, butyl methacrylate, isobutyl methacrylate, *tert*-butyl methacrylate, 2-ethylhexyl methacrylate, cyclohexyl methacrylate, octadecyl methacrylate, *n*-hexyl methacrylate, isobornyl methacrylate, phenyl methacrylate, benzyl methacrylate, hydroxypropyl methacrylate, methyl acrylate, ethyl acrylate, propyl acrylate, isopropyl acrylate, butyl acrylate, isobutyl acrylate, *tert*-butyl acrylate, 2-ethylhexyl acrylate, cyclohexyl acrylate, octadecyl acrylate, n-hexyl acrylate, isobornyl acrylate, phenyl acrylate, benzyl acrylate or hydroxypropyl acrylate.

**6.** The surfactant of claim 1, wherein a molecular weight of the hydrophilic monomers is in a range of 400 to 2000, and the hydrophilic monomers are at least one of polyethylene glycol methyl ether methacrylate, polyethylene glycol ethyl ether methacrylate, polyethylene glycol propyl ether methacrylate or polyethylene glycol methacrylate.

**7.** The surfactant of claim 1, wherein a molar content of a hydrophobic monomer structural unit is defined as *x*, a molar content of a hydrophilic monomer structural unit is defined as *y*, and the molar content *x* of the hydrophobic monomer structural unit and the molar content *y* of the hydrophilic monomer structural unit satisfy following formulas:

$$x+y=1, \text{ and } 1 \leq x/y \leq 9.$$

**8.** The surfactant of claim 7, wherein the molar content *x* of the hydrophobic monomer structural unit and the molar content *y* of the hydrophilic monomer structural unit satisfy following formulas:

$$x+y=1, \text{ and } 2 \leq x/y \leq 6.$$

**9.** The surfactant of claims 7 or 8, wherein an HLB value of the surfactant is in a range of 8 to 14.

**10.** The surfactant of claim 9, wherein the HLB value of the surfactant is in a range of 10 to 12.

11. The surfactant of any one of claims 1 to 6, wherein the surfactant is a random copolymer of the hydrophobic monomers and the hydrophilic monomers, and a reactivity ratio of the hydrophobic monomers and the hydrophilic monomers are in a range of 0.5 to 2.5.

12. The surfactant of any one of claims 1 to 6, wherein the surfactant is a multi-block copolymer with a block number greater than 5, and
in each block of the surfactant, a block length of a hydrophobic monomer structural unit is in a range of 1 to 10, or a block length of a hydrophilic monomer structural unit is in a range of 1 to 10.

13. The surfactant of claim 12, wherein a number-average molecular weight of the surfactant is in a range of 5000 to 100000.

14. The surfactant of claim 13, wherein the surfactant is capable of forming a micelle in water, a particle size of the micelle is in a range of 1 nm to 90 nm, and a content of a single molecule micelle in the micelle is greater than or equal to 50%.

15. The surfactant of claim 14, wherein the particle size of the micelle is in a range of 5 nm to 30 nm.

16. The surfactant of claim 15, wherein the particle size of the micelle is in a range of 7 nm to 15 nm.

17. A method for preparing the surfactant of any one of claims 1 to 16, **characterized by** comprising following steps: subjecting the hydrophobic monomers as shown in the formula (1) and the hydrophilic monomer as shown in the formula (2) to a polymerization reaction in a solvent containing an initiator to obtain a surfactant, wherein the formula (1) and the formula (2) are as defined in claim 1.

18. The method of claim 17, wherein the solvent is selected from at least one of methanol, ethanol, *n*-propanol, isopropanol, *tert*-butanol, ethyl acetate, dimethyl carbonate, tetrahydrofuran, ethylene glycol dimethyl ether or 1,3-dioxolane, and the surfactant is capable of being directly used without separating from the solvent after obtained.

19. Use of the surfactant of any one of claims 1 to 16, wherein the surfactant is used in an emulsion polymerization reaction as an emulsifier.

20. The use of claim 19, wherein an amount of the surfactant added in the emulsion polymerization reaction is in a range of 0.001 wt% to 5 wt% of an amount of a generated polymer.

21. The use of claim 20, wherein the amount of the surfactant added in the emulsion polymerization reaction is in a range of 0.01 wt% to 0.1 wt% of the amount of the generated polymer.

22. The use of claim 19, wherein the emulsion polymerization reaction is a polymerization reaction of a fluorine-containing monomer, or a polymerization reaction of a fluorine-containing monomer and a fluorine-free monomer;

the fluorine-containing monomer is at least one of fluoroethylene, vinylidene fluoride, trifluoroethylene, tetrafluoroethylene, hexafluoropropylene, tetrafluoropropylene, chlorotrifluoroethylene 1,1-fluoro vinyl chloride, 1,2-fluoro vinyl chloride, perfluoro alkyl vinyl, perfluoroalkyl vinyl ether, perfluoro *n*-propyl vinyl ether, perfluoromethyl vinyl ether or perfluoro(2,2-dimethyl-1,3-dioxole);
the fluorine-free monomer is at least one of ethylene, acrylates, methyl acrylate, methacrylates, methyl methacrylate, vinyl ethers, vinyl acetate, acrylonitrile, butadiene, isoprene, styrene, maleic anhydride or itaconic acid; and
when the emulsion polymerization reaction is the polymerization of the fluorine-containing monomer and the fluorine-free monomer, an amount of the fluorine-free monomer is in a range of 0 to 50 mol% of a total amount of the fluorine-containing monomer and the fluorine-free monomer.

23. The use of 22, wherein the surfactant is used for preparing copolymers selected from polyvinylidene fluoride, polyvinylidene difluoride, polytrifluoroethylene, polychlorotrifluoroethylene, polytetrafluoroethylene, vinylidene difluoride-trifluoroethylene copolymer, vinylidene difluoride- chlorotrifluoroethylene copolymer, vinylidene difluoride-tetrafluoroethylene copolymer, vinylidene difluoride-hexafluoropropylene copolymer, vinylidene difluoride-trifluoroethylene-chlorotrifluoroethylene terpolymer, vinylidene difluoride-trifluoroethylene-chlorofluoroethylene terpolymer or ethylene-chlorotrifluoroethylene copolymer.

**24.** A method for preparing a fluorine-containing polymer, **characterized by** comprising following steps: subjecting a polymerization monomer to an emulsion polymerization reaction to obtain the fluorine-containing polymer in an aqueous medium containing the surfactant of any one of claims 1 to 16 and an initiator.

**25.** The method of claim 24, wherein an amount of the surfactant is in a range of 0.001 wt% to 5 wt% of an amount of a generated fluorine-containing polymer.

**26.** The method of claim 25, wherein an amount of the surfactant is in a range of 0.01 wt% to 0.1 wt% of an amount of the generated fluorine-containing polymer.

**27.** The method of claim 25, wherein a particle size of an emulsion of the fluorine-containing polymer is in a range of 70 nm to 240 nm.

**28.** The method of claim 24, wherein the polymerization monomer is a fluorine-containing monomer or a mixture of a fluorine-containing monomer and a fluorine-free monomer,

the fluorine-containing monomer is at least one of fluoroethylene, vinylidene fluoride, trifluoroethylene, tetrafluoroethylene, hexafluoropropylene, tetrafluoropropylene, petafluoropropylene, chlorotrifluoroethylene, 1,1-fluoro vinyl chloride, 1,2-fluoro vinyl chloride, perfluoro alkyl vinyl, perfluoroalkyl vinyl ether, perfluoro *n*-propyl vinyl ether, perfluoromethyl vinyl ether or perfluoro(2,2-dimethyl-1,3-dioxole);
the fluorine-free monomer is at least one of ethylene, acrylates, methyl acrylate, methacrylates, methyl methacrylate, vinyl ethers, vinyl acetate, acrylonitrile, butadiene, isoprene, styrene, maleic anhydride or itaconic acid; and
when the polymerization monomer is the mixture of the fluorine-containing monomer and the fluorine-free monomer, an amount of the fluorine-free monomer is in a range of 0 to 50 mol% of a total amount of the fluorine-containing monomer and the fluorine-free monomer.

**29.** The method of claim 24, wherein the fluorine-containing polymer is at least one selected from polyvinylidene difluoride, polyvinylidene fluoride, polytrifluoroethylene, polychlorotrifluoroethylene, polytetrafluoroethylene, vinylidene difluoride-trifluoroethylene copolymer, vinylidene difluoride-chlorotrifluoroethylene copolymer, vinylidene difluoride-tetrafluoroethylene copolymer, vinylidene difluoride-hexafluoropropylene copolymer, vinylidene difluoride-trifluoroethylene-chlorotrifluoroethylene terpolymer, vinylidene difluoride-trifluoroethylene-chlorofluoroethylene terpolymer or ethylene-chlorotrifluoroethylene copolymer.

**30.** The method of claim 24, wherein a temperature of the emulsion polymerization reaction is in a range of 5 °C to 130 °C, and a pressure of the emulsion polymerization reaction is in a range of 0.5 MPa to 10 MPa.

**31.** A method for adjusting a particle size of a fluorine-containing polymer, **characterized by** comprising following steps:

subjecting a polymerization monomer to a polymerization reaction to obtain a fluorine-containing polymer with a particle size of an emulsion in a range of 100 nm to 250 nm in an aqueous medium containing the surfactant of any one of claims 1 to 16,
wherein the surfactant is a multi-block copolymer with a block number greater than 5, and
in each block of the surfactant, a block length of a hydrophobic monomer structural unit is in a range of 1 to 10, or a block length of a hydrophilic monomer structural unit is in a range of 1 to 10,
the surfactant is at least one of copolymers comprising a polyethylene glycol chain segments, wherein a hydrophile-lipophile balance value HLB of the surfactant is in a range of 8 to 16, and
an average degree of polymerization of the polyethylene glycol chain segments is greater than 4 and smaller than and equal to 100.

**32.** The method of claim 31, wherein the hydrophile-lipophile balance value HLB of the surfactant is in a range of 9 to 12, and
the average degree of polymerization of the polyethylene glycol chain segments is greater than 9 and smaller than and equal to 50.

**33.** The method of claim 31, wherein an amount of the surfactant is in a range of 0.01 wt% to 0.1 wt% of an amount of the generated fluorine-containing polymer.

**34.** The method of any one of claims 31 to 33, wherein the polymerization monomer is a fluorine-containing monomer or a mixture of a fluorine-containing monomer and a fluorine-free monomer,

the fluorine-containing monomer is at least one of fluoroethylene, vinylidene fluoride, trifluoroethylene, tetrafluoroethylene, hexafluoropropylene, tetrafluoropropylene, petafluoropropylene, chlorotrifluoroethylene, 1,1-fluoro vinyl chloride, 1,2-fluoro vinyl chloride, perfluoro alkyl vinyl, perfluoroalkyl vinyl ether, perfluoro *n*-propyl vinyl ether, perfluoromethyl vinyl ether or perfluoro(2,2-dimethyl-1,3-dioxole);
the fluorine-free monomer is at least one of ethylene, acrylates, methyl acrylate, methacrylates, methyl methacrylate, vinyl ethers, vinyl acetate, acrylonitrile, butadiene, isoprene, styrene, maleic anhydride or itaconic acid; and
when the polymerization monomer is the mixture of the fluorine-containing monomer and the fluorine-free monomer, an amount of the fluorine-free monomer is in a range of 0 to 50 mol% of a total amount of the fluorine-containing monomer and the fluorine-free monomer.

**35.** The method of claim 31, wherein the fluorine-containing polymer is at least one selected from polyvinylidene difluoride, polyvinylidene fluoride, polytrifluoroethylene, polychlorotrifluoroethylene, polytetrafluoroethylene, vinylidene difluoride-trifluoroethylene copolymer, vinylidene difluoride-chlorotrifluoroethylene copolymer, vinylidene difluoride-tetrafluoroethylene copolymer, vinylidene difluoride-hexafluoropropylene copolymer, vinylidene difluoride-trifluoroethylene-chlorofluoroethylene terpolymer or ethylene-chlorotrifluoroethylene copolymer.

**36.** The method of claim 31, wherein a number-average molecular weight of the fluorine-containing polymer is greater than or equal to 100000.

**37.** A method for preparing a fluorine-containing polymer with a small particle size, **characterized by** comprising:

subjecting a polymerization monomer to an emulsion polymerization reaction to obtain a fluorine-containing polymer emulsion with a particle size in a range of 70 nm to 100 nm in an aqueous medium containing the surfactant of any one of claims 1 to 16,
wherein ionic polymers are subjected to the emulsion polymerization reaction, and the ionic molecules are bonded to a molecular chain of a fluorine-containing polymer,
an amount of the ionic molecules is in a range of 0.001 wt% to 5 wt% of an amount of the generated fluorine-containing polymer,
the surfactant is a multi-block copolymer with a block number of greater than 5, and
in each block of the surfactant, a block length of a hydrophobic monomer structural unit is in a range of 1 to 10, or a block length of a hydrophilic monomer structural unit is in a range of 1 to 10.

**38.** The method of claim 37,
wherein the ionic molecules are at least one of salts of acrylic acid, ionic acrylates, salts of methacrylic acid, ionic methacrylates, ionic allyl alcohol esters, ionic allyl alcohol ethers, ionic vinyl ethers, salts of fumaric acid monoester, salts of itaconate acid, salts of 10-undecenate acid, sodium polyacrylate, sodium polymethacrylate, lithium polyacrylate, lithium polymethacrylate, ammonium polyacrylate, ammonium polymethacrylate, polyquaternium-1 to 51, sodium polystyrene sulfonate, lithium polystyrene sulfonate, or ammonium polystyrene sulfonate.

**39.** The method of claim 38, wherein the amount of the ionic molecules is in a range of 0.01 wt% to 0.1 wt% of the amount of generated fluorine-containing polymer.

**40.** The method of claim 37, wherein an HLB value of the surfactant is in a range of 8 to 16.

**41.** The method of claim 37, wherein the amount of the surfactant is in a range of 0.01 wt% to 0.1 wt% of the amount of generated fluorine-containing polymer.

**42.** The method of claim 37, wherein the polymerization monomer is a fluorine-containing monomer or a mixture of a fluorine-containing monomer and a fluorine-free monomer,

the fluorine-containing monomer is at least one of fluoroethylene, vinylidene fluoride, trifluoroethylene, tetrafluoroethylene, hexafluoropropylene, tetrafluoropropylene, petafluoropropylene, chlorotrifluoroethylene, 1,1-fluoro vinyl chloride, 1,2-fluoro vinyl chloride, perfluoro alkyl vinyl, perfluoroalkyl vinyl ether, perfluoro *n*-propyl vinyl ether, perfluoromethyl vinyl ether or perfluoro(2,2-dimethyl-1,3-dioxole);

the fluorine-free monomer is at least one of ethylene, acrylates, methyl acrylate, methacrylates, methyl methacrylate, vinyl ethers, vinyl acetate, acrylonitrile, butadiene, isoprene, styrene, maleic anhydride or itaconic acid; and

when the polymerization monomer is the mixture of the fluorine-containing monomer and the fluorine-free monomer, an amount of the fluorine-free monomer is in a range of 0 to 50 mol% of a total amount of the fluorine-containing monomer and the fluorine-free monomer.

**43.** The method of claim 37, wherein the fluorine-containing polymer is at least one selected from polyvinylidene difluoride, polyvinylidene fluoride, polytrifluoroethylene, polychlorotrifluoroethylene, polytetrafluoroethylene, vinylidene difluoride-trifluoroethylene copolymer, vinylidene difluoride-chlorotrifluoroethylene copolymer, vinylidene difluoride-tetrafluoroethylene copolymer, vinylidene difluoride-hexafluoropropylene copolymer, vinylidene difluoride-trifluoroethylene-chlorotrifluoroethylene terpolymer, vinylidene difluoride-trifluoroethylene-chlorofluoroethylene terpolymer or ethylene-chlorotrifluoroethylene copolymer.

**44.** The method of claim 37, wherein a number-average molecular weight of the fluorine-containing polymer is greater than 170000.

**45.** Use of the fluorine-containing polymer emulsion having a small particle size of any one of claims 37 to 44, wherein the fluorine-containing polymer emulsion having the small particle size is used as a component in coatings, binders, rubber, 3D printing materials, diaphragm coatings, water treatment membranes, composite additives, microgels or structural adhesives for electronic products.

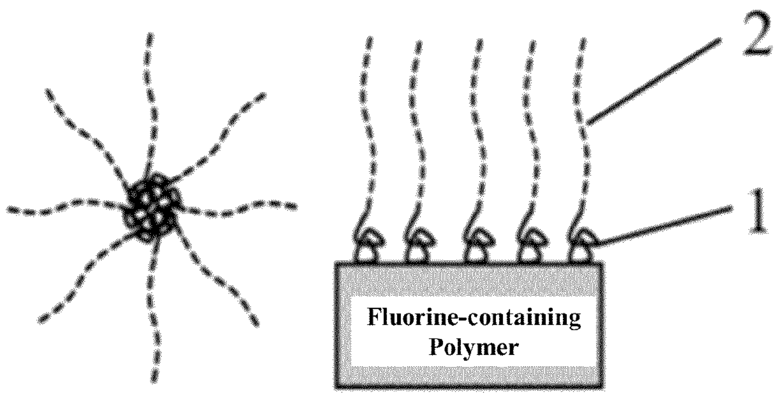


FIG. 1 (PRIOR ART)

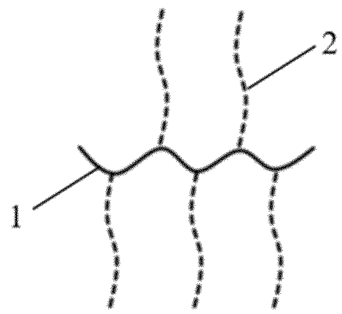


FIG. 2

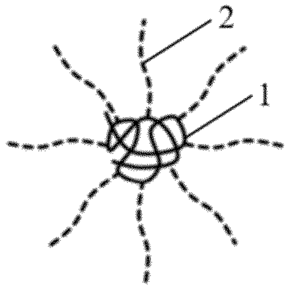


FIG. 3

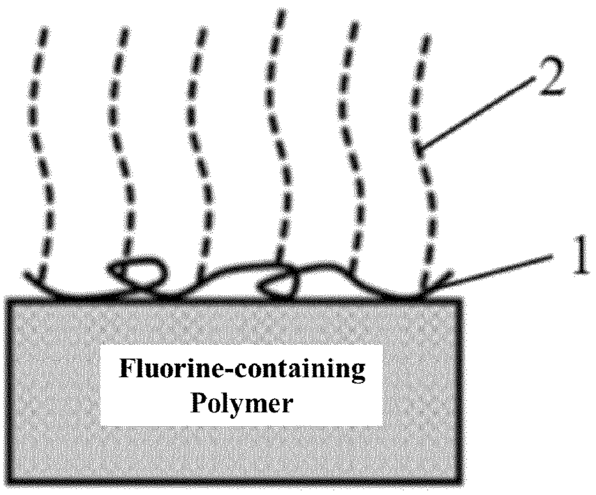


FIG. 4

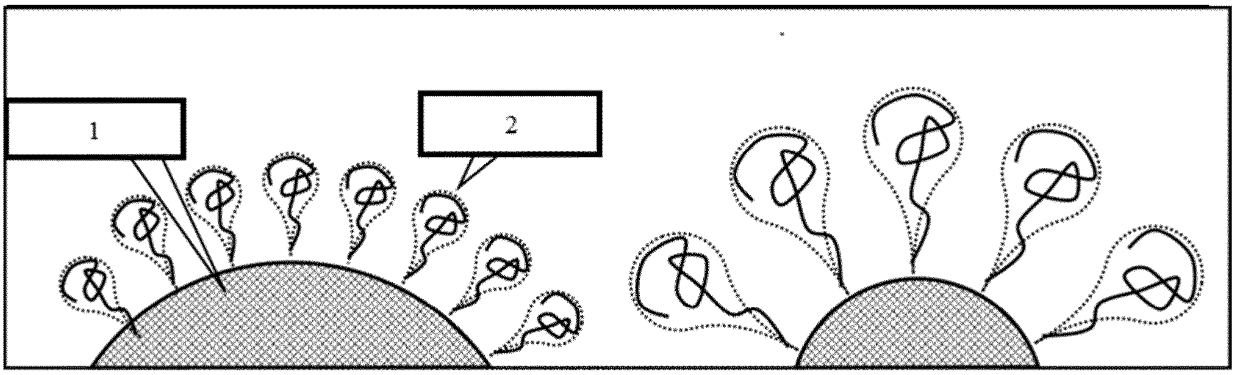
1
2

FIG. 5

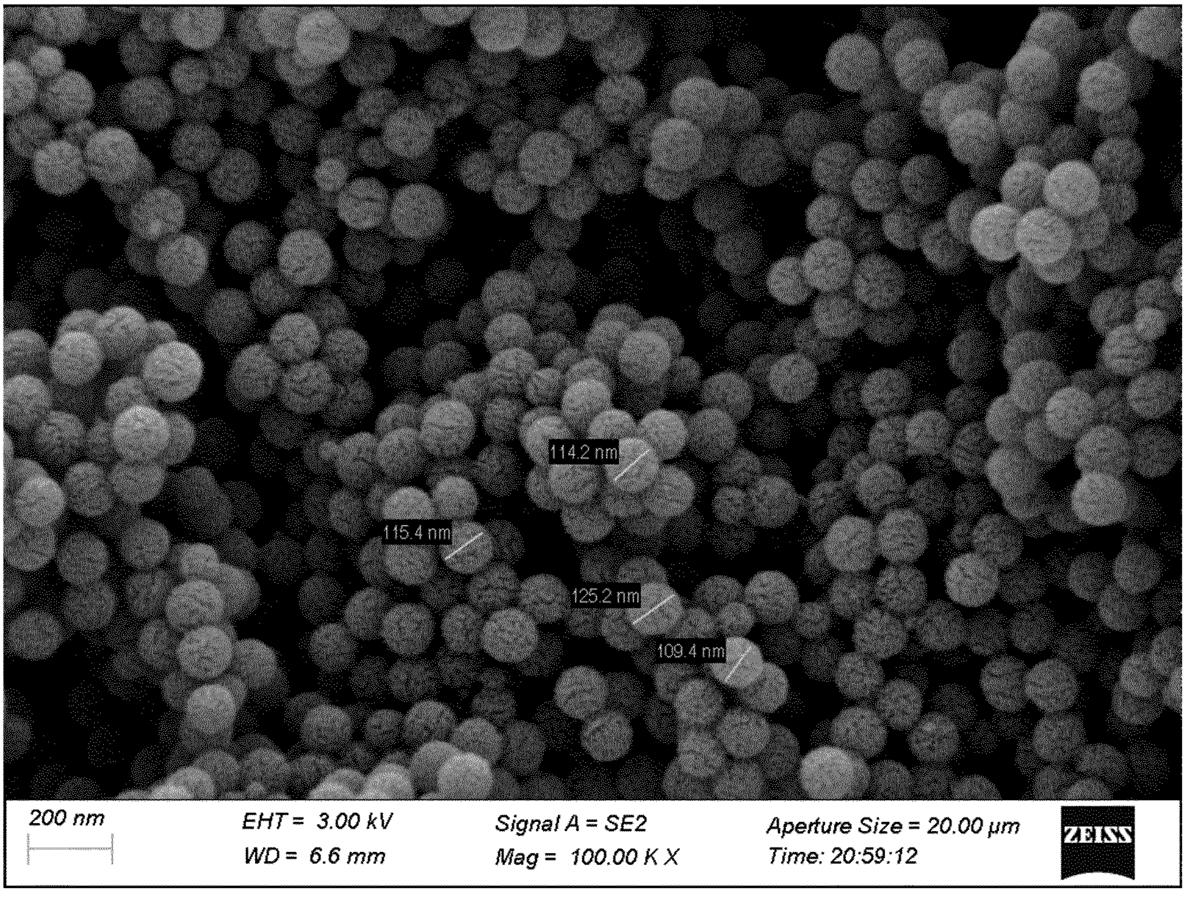
114.2 nm
115.4 nm
125.2 nm
109.4 nm
200 nm
EHT = 3.00 kV
WD = 6.6 mm
Signal A = SE2
Mag = 100.00 K X
Aperture Size = 20.00 µm
Time: 20:59:12
ZEISS

FIG. 6

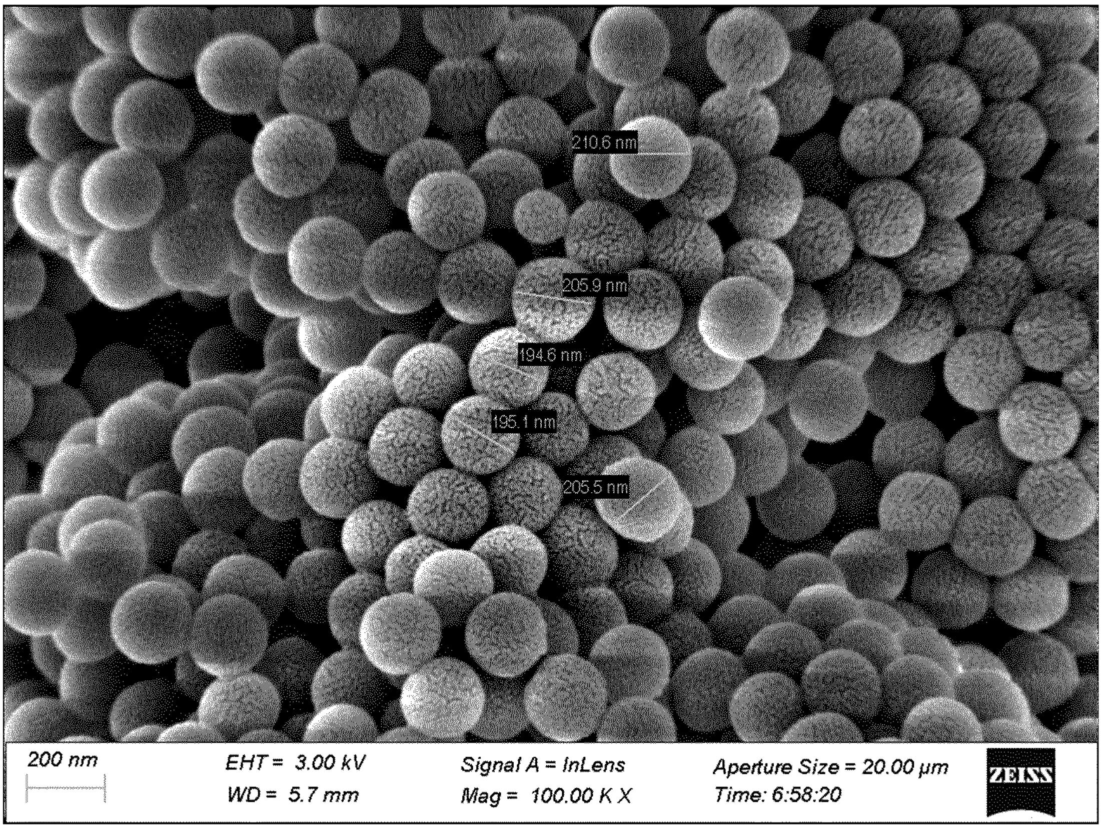
210.6 nm
205.9 nm
194.6 nm
195.1 nm
205.5 nm
200 nm
EHT = 3.00 kV
WD = 5.7 mm
Signal A = InLens
Mag = 100.00 K X
Aperture Size = 20.00 µm
Time: 6:58:20
ZEISS

FIG. 7

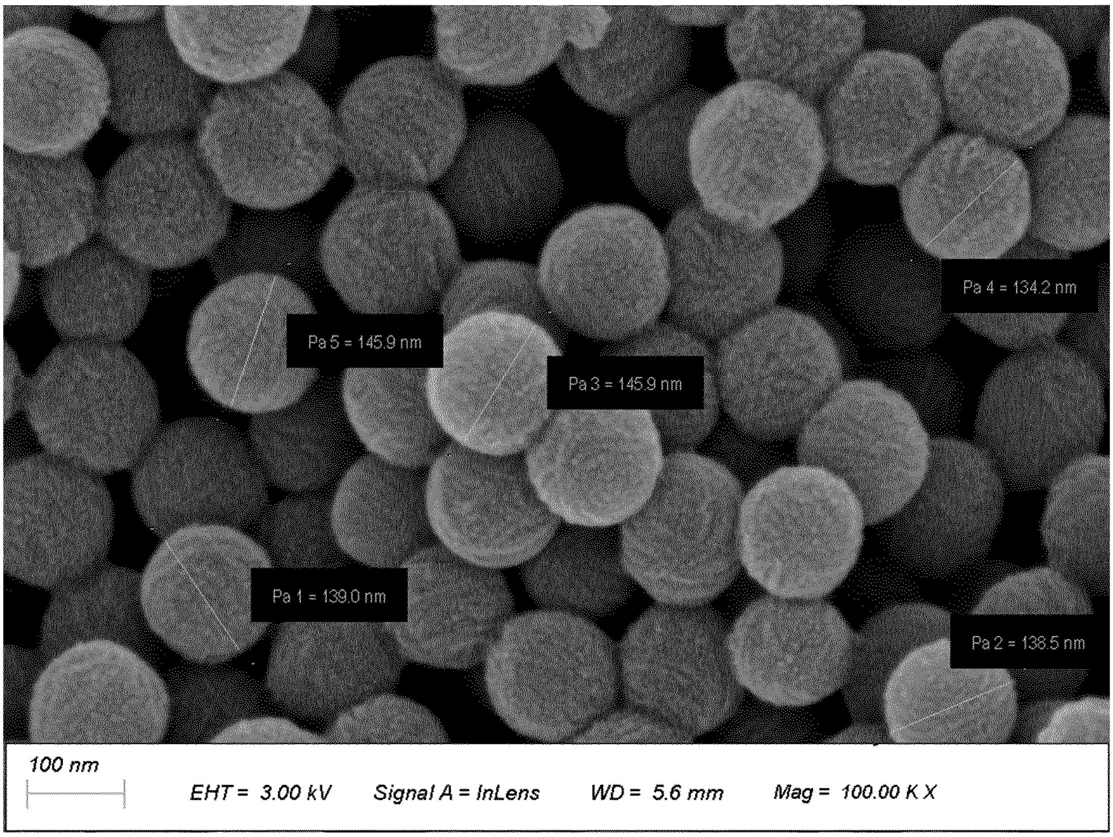
Pa 4 = 134.2 nm
Pa 5 = 145.9 nm
Pa 3 = 145.9 nm
Pa 1 = 139.0 nm
Pa 2 = 138.5 nm
100 nm
EHT = 3.00 kV
Signal A = InLens
WD = 5.6 mm
Mag = 100.00 K X

FIG. 8

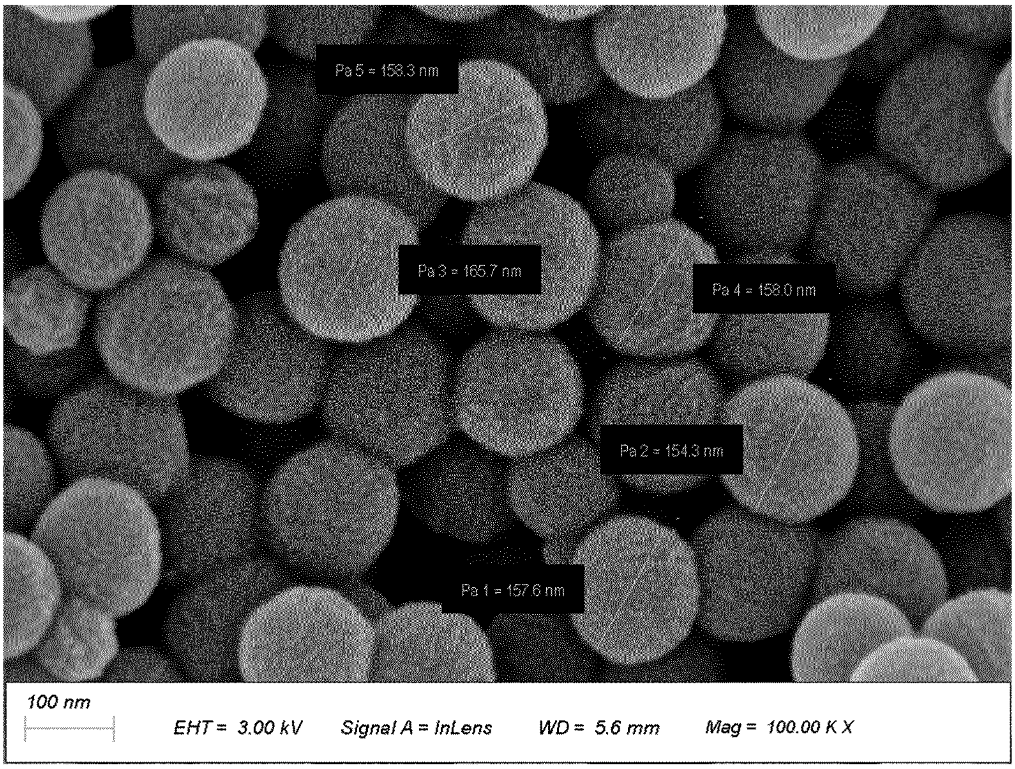
Pa 5 = 158.3 nm
Pa 3 = 165.7 nm
Pa 4 = 158.0 nm
Pa 2 = 154.3 nm
Pa 1 = 157.6 nm
100 nm
EHT = 3.00 kV
Signal A = InLens
WD = 5.6 mm
Mag = 100.00 K X

FIG. 9

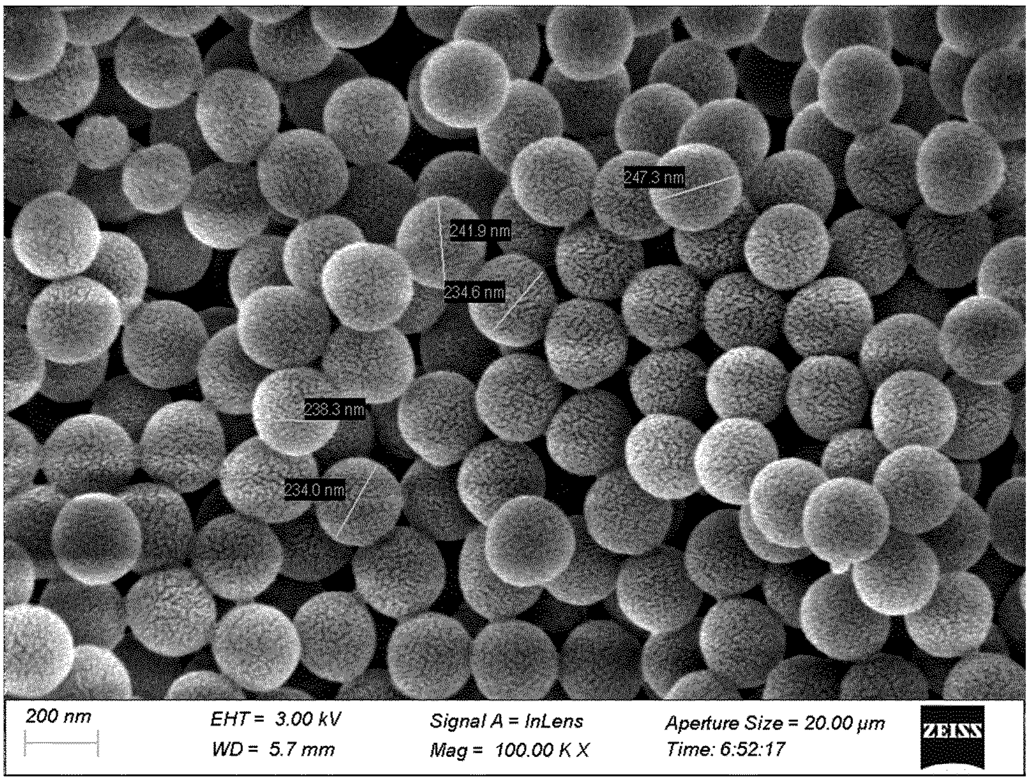
247.3 nm
241.9 nm
234.6 nm
238.3 nm
234.0 nm
200 nm
EHT = 3.00 kV
WD = 5.7 mm
Signal A = InLens
Mag = 100.00 K X
Aperture Size = 20.00 µm
Time: 6:52:17

FIG. 10

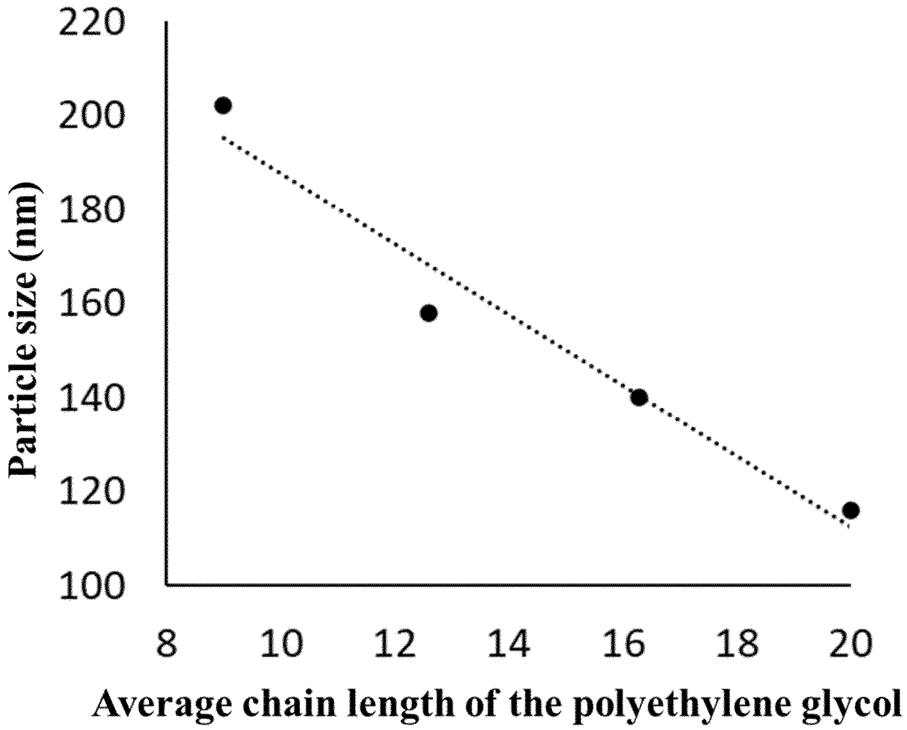
220
200
180
160
140
120
100
Particle size (nm)
8
10
12
14
16
18
20
Average chain length of the polyethylene glycol

FIG. 11

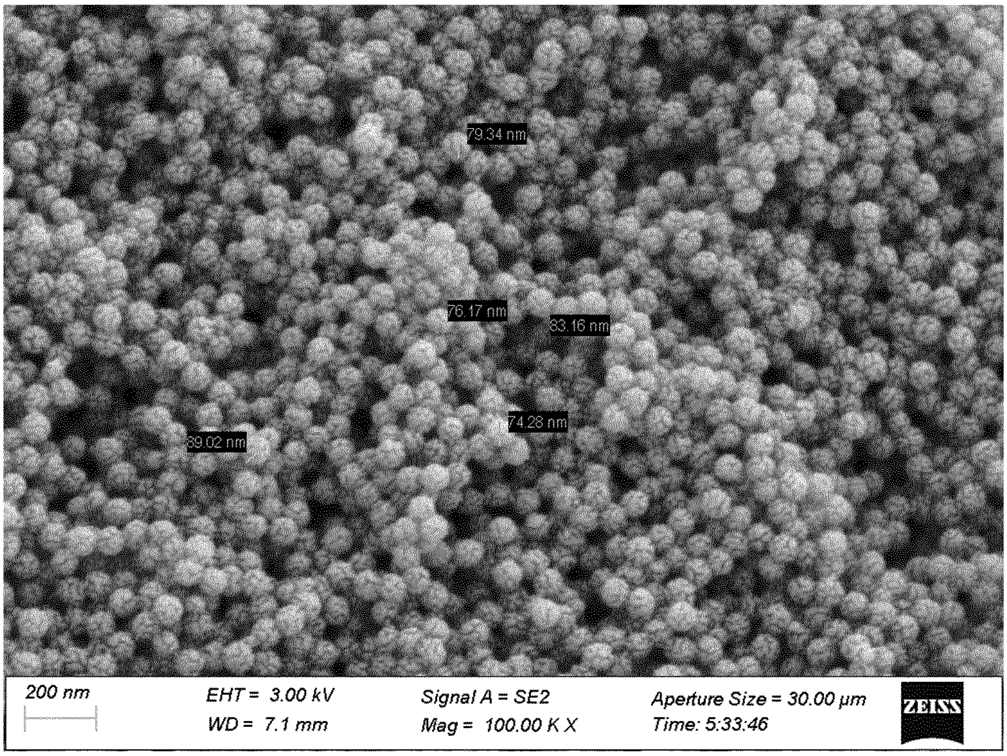
79.34 nm
76.17 nm
83.16 nm
74.28 nm
89.02 nm
200 nm
EHT = 3.00 kV
WD = 7.1 mm
Signal A = SE2
Mag = 100.00 K X
Aperture Size = 30.00 µm
Time: 5:33:46
ZEISS

FIG. 12

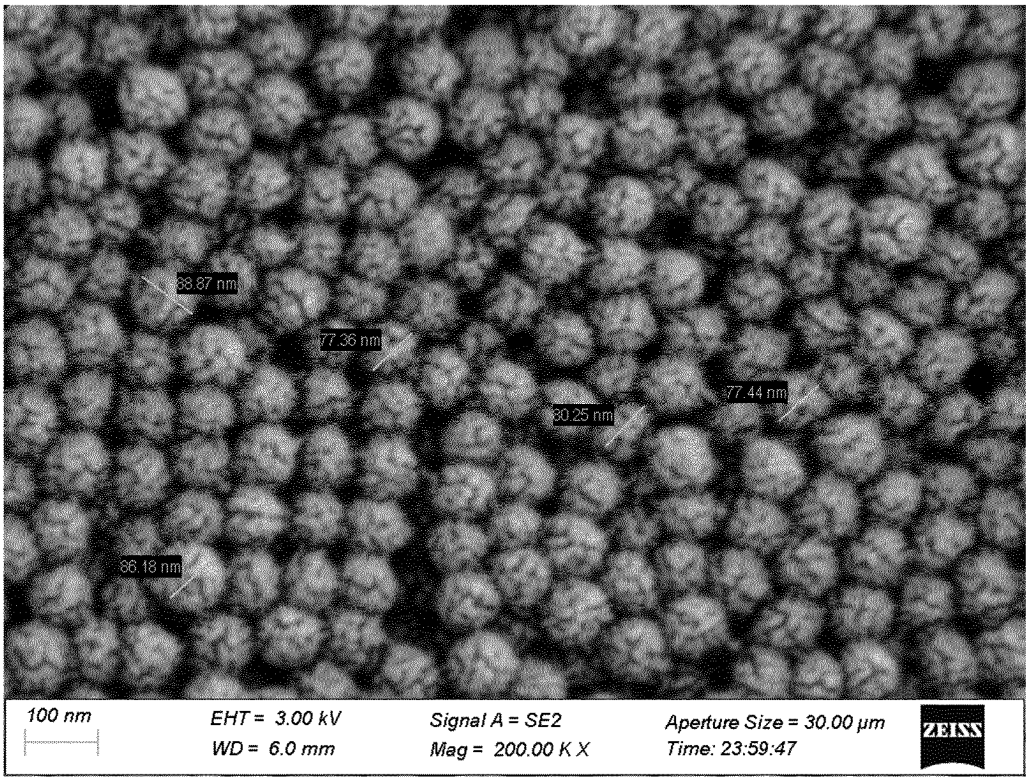
88.87 nm
77.36 nm
80.25 nm
77.44 nm
86.18 nm
100 nm
EHT = 3.00 kV
WD = 6.0 mm
Signal A = SE2
Mag = 200.00 K X
Aperture Size = 30.00 µm
Time: 23:59:47
ZEISS

FIG. 13

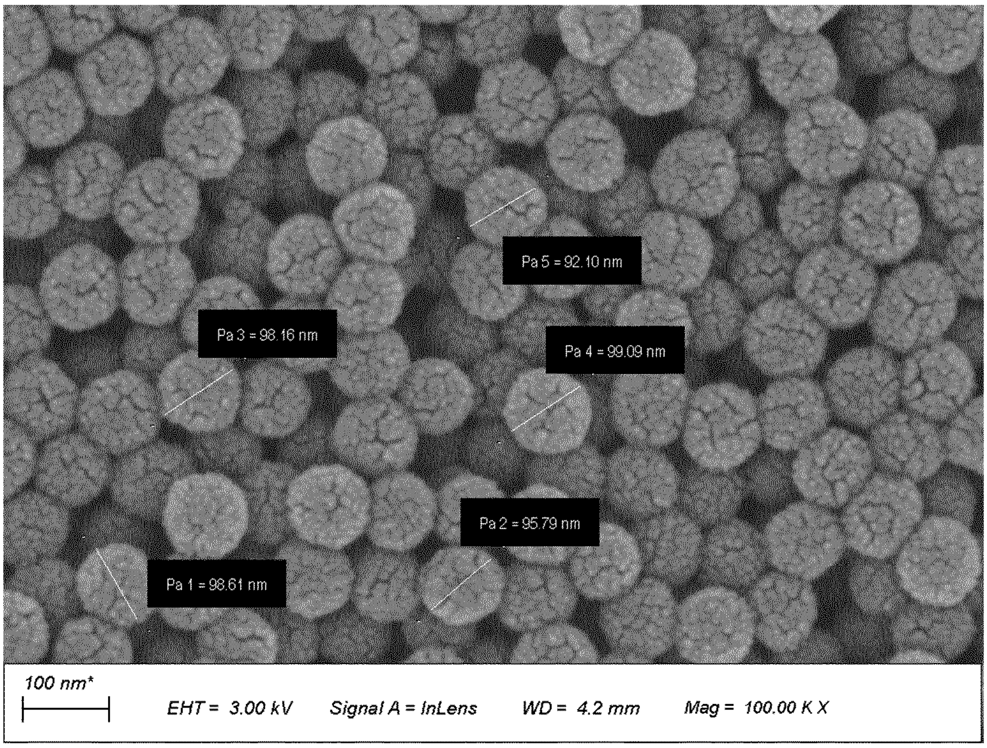
Pa 5 = 92.10 nm
Pa 3 = 98.16 nm
Pa 4 = 99.09 nm
Pa 2 = 95.79 nm
Pa 1 = 98.61 nm
100 nm*
EHT = 3.00 kV
Signal A = InLens
WD = 4.2 mm
Mag = 100.00 K X

FIG. 14

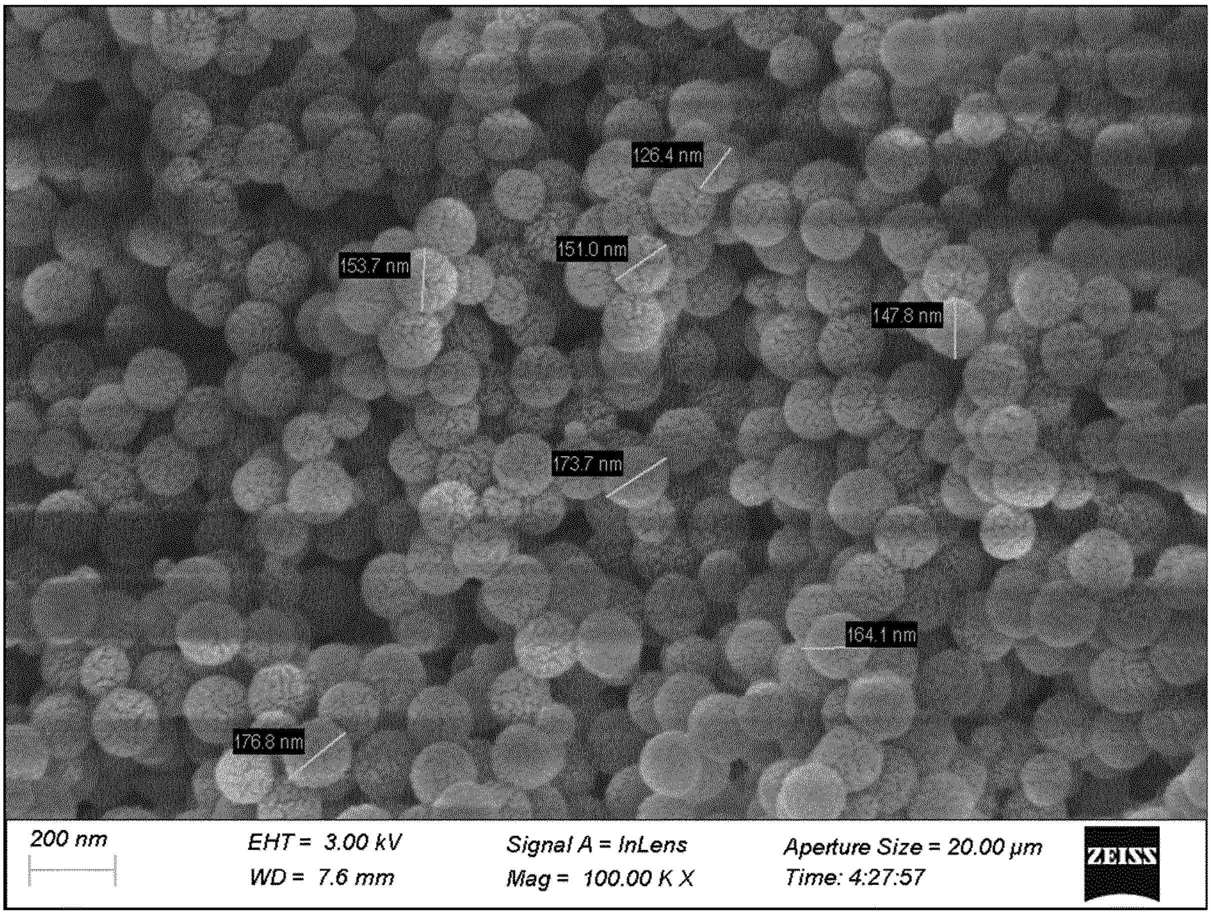
126.4 nm
153.7 nm
151.0 nm
147.8 nm
173.7 nm
164.1 nm
176.8 nm
200 nm
EHT = 3.00 kV
WD = 7.6 mm
Signal A = InLens
Mag = 100.00 K X
Aperture Size = 20.00 µm
Time: 4:27:57

FIG. 15

**INTERNATIONAL SEARCH REPORT**

International application No.
**PCT/CN2023/131095**

**A. CLASSIFICATION OF SUBJECT MATTER**

C08F283/06(2006.01)i; C08F290/06(2006.01)i; C08F220/14(2006.01)i; C08F220/12(2006.01)i; C08F220/10(2006.01)i; C08F2/24(2006.01)i; C08F14/18(2006.01)i; C08F114/18(2006.01)i; C08F214/18(2006.01)i

According to International Patent Classification (IPC) or to both national classification and IPC

**B. FIELDS SEARCHED**

Minimum documentation searched (classification system followed by classification symbols)

IPC: C08F

Documentation searched other than minimum documentation to the extent that such documents are included in the fields searched

Electronic data base consulted during the international search (name of data base and, where practicable, search terms used)

CNTXT; WPABSC; ENTXTC; WPABS; ENTXT; DWPI; CJFD; NPABS; CNKI; PATENTICS; STN; Web of Science; 万方, WANFANG; 读秀, DUXIU; 百度学术, Baidu Scholar: 浙江省化工研究院有限公司, 浙江蓝天环保高科技股份有限公司, 中化蓝天, 路杨天, 朱伟伟, 郑怡磊, 吴于松, 丙烯酸, 丙烯酰, 聚乙二醇, 聚氧乙烯, 聚氧化乙烯, 聚环氧乙烷, 单分子, 氟, 表面活性剂, 表活, 乳化剂, 分散剂, 乳液聚合, +acrylate, +acrylamide, polyethylene glycol, polyoxyethylene ether, polyethylene oxide, ?PEGM??, ?OEGMA?, unimer, single chain, single molecule, +fluor+, surfactant?, emulsifier?, dispersant?, emulsion polymerization

**C. DOCUMENTS CONSIDERED TO BE RELEVANT**

| Category* | Citation of document, with indication, where appropriate, of the relevant passages | Relevant to claim No. |
|---|---|---|
| X | Doreen Chan et al. "Single-Chain Polymeric Nanocarriers: A Platform for Determining Structure-Function Correlations in the Delivery of Molecular Cargo" *Biomacromolecules,* Vol. vol. 18, 06 March 2017 (2017-03-06), pp. 1434-1439 ISSN: 1526-4602, page 1435, right-hand column, paragraphs 1-2, and page 1436, table 1 | 1-18 |
| X | Shota Imai et al. "Programmed Self-Assembly Systems of Amphiphilic Random Copolymers into Size-Controlled and Thermoresponsive Micelles in Water" *Macromolecules,* Vol. vol. 51, 05 January 2018 (2018-01-05), pp. 398-409 ISSN: 1520-5835, page 399, left-hand column, paragraph 1 to page 404, right-hand column, paragraph 2, figures 1-5 | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2024** | **08 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No. **PCT/CN2023/131095**

**C. DOCUMENTS CONSIDERED TO BE RELEVANT**

| Category* | Citation of document, with indication, where appropriate, of the relevant passages | Relevant to claim No. |
|---|---|---|
| X | Birsen Somuncuoğlu et al. "Ethyl Methacrylate Diblock Copolymers as Polymeric Surfactants: Effect of Molar Mass and Composition" *European Polymer Journal,* Vol. vol. 154, 27 May 2021 (2021-05-27), pages 1-11 ISSN: 1873-1945, section 2.1, figure 2, and tables 1-2 | 1, 5, 7-13, 17-18 |
| X | Chorng-Shyan Chern et al. "Effect of the Structure of Amphiphilic Poly(ethylene glycol)-Containing Graft Copolymers on Styrene Emulsion Polymerization" *Journal of Polymer Science Part A: Polymer Chemistry,* Vol. 40, No. (10), 03 April 2002 (2002-04-03), pp. 1608-1624 ISSN: 1099-0518, page 1609, right-hand column, paragraph 2 to page 1611, left-hand column, paragraph 2, tables 1-2, and figure 3 | 1, 5, 11, 17-21 |
| X | CN 102046672 A (ASAHI GLASS CO., LTD.) 04 May 2011 (2011-05-04) description, paragraphs 0045-0272 | 1, 5-6, 11, 17-30 |
| X | CN 102091564 A (YU, Linhua) 15 June 2011 (2011-06-15) description, paragraphs 0005-0019 | 1, 5-6, 11, 17-21 |
| X | WO 9704756 A2 (NANOSYSTEMS LLC) 13 February 1997 (1997-02-13) claim 1 | 1-7, 9-11, 17-18 |
| X | CN 1136285 A (NYCOMED IMAGING A/S) 20 November 1996 (1996-11-20) embodiment 2f | 1-6, 11, 17-18 |
| X | 侯旭明等 (HOU, Xuming et al.). "丙烯酸酯共聚物表面活性剂/多异氰酸酯乳液的制备及表面施胶性能 (Preparation of Acrylate Copolymer Surfactant/Polyisocyanate Emulsion and Surface Sizing Performance)" *合成化学 (Chinese Journal of Synthetic Chemistry),* Vol. 28, No. (4), 20 April 2020 (2020-04-20), pp. 263-269 ISSN: 1005-1511, section 1.2 | 1-11, 17-18 |
| A | CN 101547966 A (ARKEMA INC.) 30 September 2009 (2009-09-30) entire document | 1-45 |
| A | CN 113227167 A (ARKEMA INC.) 06 August 2021 (2021-08-06) entire document | 1-45 |
| A | CN 114106622 A (ZHEJIANG INSTITUTE OF CHEMICAL RESEARCH CO., LTD. et al.) 01 March 2022 (2022-03-01) entire document | 1-45 |
| A | JP 2001164065 A (ASAHI GLASS CO., LTD.) 19 June 2001 (2001-06-19) entire document | 1-45 |

**INTERNATIONAL SEARCH REPORT**

International application No. **PCT/CN2023/131095**

**Box No. III Observations where unity of invention is lacking (Continuation of item 3 of first sheet)**

This International Searching Authority found multiple inventions in this international application, as follows:

The international application has seven groups of claimed inventions:

The first group: claims 1-16 relate to a surfactant.

The second group: claims 17-18 relate to a preparation method for a surfactant.

The third group: claims 19-23 relate to the use of a surfactant.

The fourth group: claims 24-30 relate to a preparation method for a fluoropolymer.

The fifth group: claims 31-36 relate to a method for adjusting the particle size of a fluoropolymer emulsion.

The sixth group: claims 37-44 relate to a preparation method for a small-particle-size fluoropolymer emulsion.

The seventh group: claim 45 relates to the use of a small-particle-size fluoropolymer emulsion.

The same or corresponding technical feature between the first group of invention and the second to seventh groups of inventions is "the surfactant of any one of claims 1 to 16"; however, the above-mentioned feature is disclosed in the prior art (see D1: Biomacromolecules 2017, vol. 18, pp. 1434-1439; D2: Macromolecules 2018, vol. 51, pp. 398-409; D3: European Polymer Journal 2021, vol. 154, 110537, pp. 1-11; D4: Journal of Polymer Science: Part A: Polymer Chemistry 2002, vol. 40, pp. 1608-1624).

The same or corresponding technical feature between the third group of invention and the fourth and sixth groups of inventions is "the surfactant of any one of claims 1 to 16 for emulsion polymerization reaction"; however, the above-mentioned feature is disclosed in the prior art (see D4: Journal of Polymer Science: Part A: Polymer Chemistry 2002, vol. 40, pp. 1608-1624).

The same or corresponding technical feature between the fourth group of invention and the fifth to seventh groups of inventions is "in an aqueous medium, polymerizing in the presence of the surfactant of any one of claims 1 to 16 to obtain a fluoropolymer"; however, the above-mentioned feature is disclosed in the prior art (see D5: CN 102046672 A).

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/CN2023/131095**

| Patent document cited in search report | | | Publication date (day/month/year) | Patent family member(s) | | | Publication date (day/month/year) |
|---|---|---|---|---|---|---|---|
| CN | 102046672 | A | 04 May 2011 | US | 2011071248 | A1 | 24 March 2011 |
| | | | | WO | 2009148098 | A1 | 10 December 2009 |
| | | | | TW | 201004983 | A | 01 February 2010 |
| | | | | TWI | 468421 | B | 11 January 2015 |
| | | | | KR | 20110013410 | A | 09 February 2011 |
| | | | | KR | 101578243 | B1 | 16 December 2015 |
| | | | | EP | 2284204 | A1 | 16 February 2011 |
| | | | | EP | 2284204 | A4 | 10 August 2011 |
| | | | | EP | 2284204 | B1 | 14 August 2013 |
| | | | | JPWO | 2009148098 | A1 | 04 November 2011 |
| | | | | JP | 5678660 | B2 | 04 March 2015 |
| | | | | CN | 102046672 | B | 29 January 2014 |
| CN | 102091564 | A | 15 June 2011 | | None | | |
| WO | 9704756 | A2 | 13 February 1997 | AU | 6546496 | A | 26 February 1997 |
| | | | | WO | 9704756 | A3 | 27 March 1997 |
| CN | 1136285 | A | 20 November 1996 | JPH | 09503202 | A | 31 March 1997 |
| | | | | JP | 3552721 | B2 | 11 August 2004 |
| | | | | CZ | 62796 | A3 | 12 March 1997 |
| | | | | WO | 9506518 | A1 | 09 March 1995 |
| | | | | DE | 69430432 | D1 | 23 May 2002 |
| | | | | DE | 69430432 | T2 | 12 December 2002 |
| | | | | AU | 7541594 | A | 22 March 1995 |
| | | | | AU | 689495 | B2 | 02 April 1998 |
| | | | | GB | 9318288 | D0 | 20 October 1993 |
| | | | | EP | 0717658 | A1 | 26 June 1996 |
| | | | | EP | 0717658 | B1 | 17 April 2002 |
| | | | | US | 5919434 | A | 06 July 1999 |
| | | | | CN | 1072521 | C | 10 October 2001 |
| CN | 101547966 | A | 30 September 2009 | EP | 2089462 | A1 | 19 August 2009 |
| | | | | EP | 2089462 | A4 | 27 January 2010 |
| | | | | EP | 2089462 | B1 | 21 December 2011 |
| | | | | US | 2013079461 | A1 | 28 March 2013 |
| | | | | US | 9068071 | B2 | 30 June 2015 |
| | | | | JP | 2010512429 | A | 22 April 2010 |
| | | | | JP | 5410987 | B2 | 05 February 2014 |
| | | | | US | 2007082993 | A1 | 12 April 2007 |
| | | | | US | 8338518 | B2 | 25 December 2012 |
| | | | | WO | 2008073685 | A1 | 19 June 2008 |
| | | | | ES | 2379295 | T3 | 24 April 2012 |
| | | | | CN | 101547966 | B | 10 July 2013 |
| CN | 113227167 | A | 06 August 2021 | JP | 2022507206 | A | 18 January 2022 |
| | | | | US | 2022073721 | A1 | 10 March 2022 |
| | | | | WO | 2020101963 | A2 | 22 May 2020 |
| | | | | WO | 2020101963 | A3 | 13 August 2020 |
| | | | | KR | 20210091258 | A | 21 July 2021 |
| | | | | EP | 3880719 | A2 | 22 September 2021 |
| | | | | EP | 3880719 | A4 | 10 August 2022 |
| CN | 114106622 | A | 01 March 2022 | CN | 114106622 | B | 06 September 2022 |
| JP | 2001164065 | A | 19 June 2001 | | None | | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- CN 202211419402
- CN 202211425292
- CN 202211419393
- CN 202211431306
- CN 104292374 A
- CN 104292378 A
- US 2847404 A
- US 5859123 A
- CN 1535989 A
- CN 111148772 A